(19) **Europäisches Patentamt / European Patent Office / Office européen des brevets**

(11) **EP 2 418 252 B1**

(12) **EUROPEAN PATENT SPECIFICATION**

(45) Date of publication and mention
of the grant of the patent:
**28.02.2018 Bulletin 2018/09**

(51) Int Cl.:
**C08L 69/00** [(2006.01)]  **C08G 63/88** [(2006.01)]
**C08K 5/13** [(2006.01)]  **C08K 5/524** [(2006.01)]
**C08L 67/03** [(2006.01)]

(21) Application number: **10761619.5**

(22) Date of filing: **30.03.2010**

(86) International application number:
**PCT/JP2010/055647**

(87) International publication number:
**WO 2010/116920 (14.10.2010 Gazette 2010/41)**

(54) **POLYCARBONATE/POLYETHYLENE TEREPHTHALATE COMPOSITE RESIN COMPOSITION AND MOLDED ARTICLE**

POLYCARBONAT/POLYETHYLEN-TEREPHTHALAT-VERBUNDHARZZUSAMMENSETZUNG UND FORMARTIKEL DARAUS

COMPOSITION DE RÉSINE COMPOSITE POLYCARBONATE/POLY(TÉRÉPHTALATE D'ÉTHYLÈNE) ET ARTICLE MOULÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.04.2009 JP 2009094983**
**09.04.2009 JP 2009094984**
**09.04.2009 JP 2009094986**
**09.04.2009 JP 2009094985**

(43) Date of publication of application:
**15.02.2012 Bulletin 2012/07**

(73) Proprietor: **Mitsubishi Engineering-Plastics Corporation**
**Tokyo 105-0021 (JP)**

(72) Inventors:
• **NAGANO, Fumisato**
**Hiratsuka-shi**
**Kanagawa 254-0016 (JP)**
• **ARIKAWA, Yuuya**
**Hiratsuka-shi**
**Kanagawa 254-0016 (JP)**
• **FUJIOKA, Kiyotoshi**
**Hiratsuka-shi**
**Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 860 155**   **EP-A2- 0 626 425**
**JP-A- 10 237 295**   **JP-A- 2003 128 905**
**JP-A- 2007 023 118**   **JP-A- 2009 001 620**

• **DATABASE WPI Week 200645 Thomson Scientific, London, GB; AN 2006-445842 XP002734787, & WO 2006/062148 A1 (TOYO BOSEKI KK) 15 June 2006 (2006-06-15)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of Invention

A first aspect of the present invention relates to a method for producing a polycarbonate/polyethylene terephthalate composite resin composition which is produced as a result of compounding a polycarbonate resin with a polyethylene terephthalate resin to exhibit chemical resistance and relates to a method for producing a molded article which is produced as a result of molding by using the polycarbonate/polyethylene terephthalate composite resin, the polycarbonate/polyethylene terephthalate composite resin composition exhibiting enhanced thermal stability and molding stability.

Background of Invention

A polycarbonate resin, especially an aromatic polycarbonate resin, has excellence in impact resistance, resistance to thermal deformation, rigidity, and dimensional stability and is therefore used in a wide range of fields such as electric equipment, communication equipment, precision instruments, and automobile components. To the contrary, the polycarbonate resin has a disadvantage of poor chemical resistance, and various studies for compounding the polycarbonate resin with a polyethylene terephthalate resin have been made to enhance the chemical resistance of the polycarbonate resin (see, Patent Documents 1 and 2, for example).

In the case where the polycarbonate resin is compounded with the polyethylene terephthalate resin, unfortunately, the produced resin composition has poor thermal stability while exhibiting enhanced chemical resistance. Such a resin composition is preserved inside a cylinder at high temperature during a molding process, thereby causing transesterification between the polycarbonate resin and the polyethylene terephthalate resin. The transesterification contributes to generating decomposition gas, thereby causing defective appearance of a molded article, such as so-called foaming or silver streak. The molecular weight of the polycarbonate resin is then decreased, thereby causing disadvantages such as decrease in impact resistance and resistance to thermal deformation, each resistance being inherent in the polycarbonate resin.

Furthermore, the decrease of the molecular weight of the polycarbonate resin not only causes the decrease in impact resistance and resistance to thermal deformation, which are inherent in the polycarbonate resin, but causes the following disadvantages:

(1) coagulation of high-viscosity elastomers progresses in the polycarbonate resin composition, thereby reducing the fluidity of the resin composition;

(2) the polycarbonate resin is preserved at high temperature, thereby causing the viscosity of the polycarbonate resin to be changed; and

(3) the above items (1) and (2) contribute to reduction of the molding stability during injection molding, thereby causing problems such as the occurrence of short shot and mold flash.

Prior Art Documents

Patent Documents

Patent Document 1: Japanese Patent Publication 2007-23118
Patent Document 2: Japanese Patent Publication 2009-1620

Summary of Invention

Problems to be Solved by the Invention

The present invention is made to overcome the above disadvantages.

A first aspect of the invention solves the following problem: to provide a polycarbonate/polyethylene terephthalate composite resin composition, in which the polycarbonate/polyethylene terephthalate composite resin composition is prevented from being deteriorated resulting from being thermally preserved; and to provide a molded article which is produced as a result of molding by using the polycarbonate/polyethylene terephthalate composite resin composition (problem I).

A second aspect of the invention solves the following problem: to provide a polycarbonate/polyethylene terephthalate composite resin composition, in which the polycarbonate/polyethylene terephthalate composite resin composition is prevented from being deteriorated resulting from being thermally preserved and in which molding stability is enhanced; and to provide a molded article which is produced as a result of molding by using the polycarbonate/polyethylene terephthalate composite resin composition (problem II).

A third aspect of the invention solves the following problem: to provide a polycarbonate/polyethylene terephthalate composite resin composition, in which a polycarbonate resin/polyethylene terephthalate resin composite resin composition is prevented from being deteriorated resulting from being thermally preserved and in which molding stability is enhanced; and to provide a molded article which is produced as a result of molding by using the polycarbonate/polyethylene terephthalate composite resin composition (problem III).

A fourth aspect of the invention solves the following problem: to provide a polycarbonate/polyethylene terephthalate composite resin composition, in which a polycarbonate resin/polyethylene terephthalate resin composite resin composition is prevented from being deteriorated resulting from being thermally preserved and in which molding stability is enhanced; and to provide a molded article which is produced as a result of molding by using the polycarbonate/polyethylene terephthalate composite resin composition (problem IV).

Means of Solving the Problems

The inventors have intensely studied for solving the problem I and have then found the following, thereby completing the study for the first aspect of the invention: a polycondensation catalyst which is used in a process for producing a polyethylene terephthalate resin and which is contained in a commercially available polyethylene terephthalate resin contributes to the occurrence of the above disadvantage in which the polycarbonate/polyethylene terephthalate composite resin composition is deteriorated resulting from being thermally preserved; a polyethylene terephthalate resin in which the polycondensation catalyst is deactivated is therefore used as the polyethylene terephthalate resin with the result that the deterioration due to thermal preservation is suppressed; and such a polyethylene terephthalate resin is used, and a specific thermal stabilizer is added with the result that the occurrence of the deterioration due to thermal preservation can be further steadily suppressed.

The first aspect of the invention provides the following inventiveness:

a method for producing a polycarbonate/polyethylene terephthalate composite resin composition is provided, which comprises a step of fusing and kneading: a resin component of 100 parts by weight; and a phosphite compound or a phosphate compound employed as a phosphorus thermal stabilizer of 0.01 to 0.5 parts by weight and/or a hindered phenol thermal stabilizer of 0.01 to 1 parts by weight, the resin component containing a polycarbonate resin of 95 to 30 weight% and a polyethylene terephthalate resin of 5 to 70 weight%, wherein the polyethylene terephthalate resin contains a deactivated polycondensation catalyst; the catalyst being a germanium catalyst or a titanium catalyst, wherein the polyethylene terephthalate resin containing the deactivated polycondensation catalyst has an intrinsic viscosity $[\eta]$ of 0.6 to 1.5 dl/g,

wherein the germanium catalyst is deactivated as a result of subjecting the polyethylene terephthalate resin to hot-water vapor treatment, and

wherein the titanium catalyst is deactivated by adding a phosphorous compound to the polyethylene terephthalate resin, the phosphorous compound being a phosphonate compound represented by the following formula (2):

$$R^1OC(O)XP(O)(OR^2)_2... \qquad (2)$$

wherein $R^1$ and $R^2$ are each an alkyl group having one to four carbon atoms, X represents $-CH_2-$ or $-CH(Y)-$, Y represents a phenyl group, and $R^1$ and $R^2$ may be the same or different,

wherein the intrinsic viscosity is calculated from the relative viscosities of solutions of a frozen and crushed PET specimen in a mixture of phenol and tetrachloroethane (weight ratio 1/1) at concentrations of 1.0 g/dl, 0.5 g/dl, 0.2 g/dl and 0.1 g/dl, the relative viscosities being measured with an Ubbelohde viscosimeter at a temperature of 30°C;

and a method for producing a molded article of a polycarbonate/polyethylene terephthalate composite resin is provided, which is produced as a result of molding by using any of the polycarbonate/polyethylene terephthalate composite resin composition produced by the method for producing a polycarbonate/polyethylene terephthalate composite resin composition.

Furthermore, the inventors have intensely studied for solving the problem II and have then found the following, thereby completing the study for the second aspect of the invention: a polycondensation catalyst which is used in a process for producing a polyethylene terephthalate resin and which is contained in a commercially available polyethylene terephthalate resin contributes to the occurrence of the above disadvantage in which the polycarbonate/polyethylene terephthalate composite resin composition is deteriorated resulting from being thermally preserved; a polyethylene terephthalate resin in which the polycondensation catalyst is deactivated is therefore used as the polyethylene terephthalate resin, and a specific thermal stabilizer is added, thereby being able to further steadily suppress the deterioration due to thermal preservation; and an elastomer which is added as an impact modifier, preferably a core/shell elastomer, is used in a certain amount, thereby being able to unexpectedly suppress the increase of viscosity during the preservation and being able to enhance molding stability.

The second aspect of the invention provides the following inventiveness:

the method for producing a polycarbonate/polyethylene terephthalate composite resin composition according to the first aspect, wherein the polycarbonate/polyethylene terephthalate composite resin composition further comprises an elastomer of 1 to 10 parts by weight ;

and the method for producing the molded article according to the first aspect, wherein the polycarbonate/polyethylene terephthalate composite resin composition further comprises an elastomer of 1 to 10 parts by weight.

Furthermore, the inventors have intensely studied for solving the problem III and have then found the following, thereby completing the study for the third aspect of the invention: a polycondensation catalyst which is used in a process for producing a polyethylene terephthalate resin and which is contained in a commercially available polyethylene terephthalate resin contributes to the occurrence of the above disadvantage in which the polycarbonate/polyethylene terephthalate composite resin composition is deteriorated resulting from being thermally preserved; a polyethylene terephthalate resin in which the polycondensation catalyst is deactivated is therefore used as the polyethylene terephthalate resin, and a specific thermal stabilizer is added, thereby being able to further steadily suppress the deterioration due to thermal preservation; and an inorganic filler, preferably a glass fiber, is used in a certain amount, thereby being able to unexpectedly suppress the increase of viscosity during the preservation and being able to enhance molding stability.

The third aspect of the invention provides the following inventiveness:

the method for producing a polycarbonate/polyethylene terephthalate composite resin composition according to the first aspect, wherein the polycarbonate/polyethylene terephthalate composite resin composition further comprises an inorganic filler of 1 to 20 parts by weight; ;
and the method for producing the molded article according to the first aspect, wherein the polycarbonate/polyethylene terephthalate composite resin composition further comprises an inorganic filler of 1 to 20 parts by weight.

Furthermore, the inventors have intensely studied for solving the problem IV and have then found the following, thereby completing the study for the fourth aspect of the invention: a polycondensation catalyst which is used in a process for producing a polyethylene terephthalate resin and which is contained in a commercially available polyethylene terephthalate resin contributes to the occurrence of the above disadvantage in which the polycarbonate resin/polyethylene terephthalate resin composite resin composition is deteriorated resulting from being thermally preserved; and a polyethylene terephthalate resin in which the polycondensation catalyst is deactivated is therefore used as the polyethylene terephthalate resin, and a specific thermal stabilizer is added, thereby being able to further steadily suppress the deterioration due to thermal preservation. In addition, an elastomer and an inorganic filler are used in certain amounts, thereby being able to suppress the increase of viscosity during the preservation and being able to enhance molding stability.

The fourth aspect of the invention provides the following inventiveness:

the method for producing a polycarbonate/polyethylene terephthalate composite resin composition according to the first aspect, wherein the polycarbonate/polyethylene terephthalate composite resin composition further comprises an elastomer of 1 to 10 parts by weight, and an inorganic filler of 1 to 20 parts by weight ; ;
and the method for producing the molded article according to the first aspect, wherein the polycarbonate/polyethylene terephthalate composite resin composition further comprises an elastomer of 1 to 10 parts by weight, and an inorganic filler of 1 to 20 parts by weight.

Advantageous Effects of the Invention

[Advantage I]

According to the first aspect of the invention, a method for producing a polycarbonate/polyethylene terephthalate composite resin composition is provided, in which a polycarbonate resin is compounded with a polyethylene terephthalate resin with the result that chemical resistance is imparted. The polycarbonate/polyethylene terephthalate composite resin composition is less likely to be deteriorated resulting from being thermally preserved and exhibits excellent thermal stability.

[Advantage II]

According to the second aspect of the invention, a method for producing a polycarbonate/polyethylene terephthalate composite resin composition is provided, in which a polycarbonate resin is compounded with a polyethylene terephthalate resin and an elastomer with the result that chemical resistance and impact resistance are respectively imparted. The polycarbonate/polyethylene terephthalate composite resin composition is less likely to be deteriorated resulting from being thermally preserved, is prevented from exhibiting increased viscosity, and exhibits excellent thermal stability and molding stability.

[Advantage III]

According to the third aspect of the invention, a method for producing a polycarbonate/polyethylene terephthalate composite resin composition is provided, in which a polycarbonate resin is compounded with a polyethylene terephthalate resin and an inorganic filler with the result that chemical resistance and properties such as rigidity and thermal stability are respectively imparted. The polycarbonate/polyethylene terephthalate composite resin composition is less likely to be deteriorated resulting from being thermally preserved, is prevented from exhibiting increased viscosity, and exhibits excellent thermal stability and molding stability.

[Advantage IV]

According to the fourth aspect of the invention, a method for producing a polycarbonate/polyethylene terephthalate composite resin composition is provided, in which a polycarbonate resin is compounded with a polyethylene terephthalate resin, an elastomer, and an inorganic filler with the result that chemical resistance, impact resistance, and properties such as rigidity and thermal stability are respectively imparted. The polycarbonate/polyethylene terephthalate composite resin composition is less likely to be deteriorated resulting from being thermally preserved, is prevented from exhibiting increased viscosity, and exhibits excellence in thermal stability, molding stability, and balance in mechanical properties such as Charpy impact strength and elastic modulus.

Such polycarbonate/polyethylene terephthalate (PC/PET) composite resin compositions produced by the methods according to the first to fourth aspects of the invention are used for a broad range of application such as components of electric-electronic equipment, office automation equipment, machine components, automobile parts, building components, various containers, and goods for leisure-time amusement·groceries. In particular, such PC/PET composite resin compositions are expected to be applied to the exterior·outside plate components of automobiles and the interior components of automobiles.

Examples of the exterior·outside plate components which are included in automobiles and to which the PC/PET composite resin compositions produced by the methods according to the first to fourth aspects of the invention are applied include an outer door handle, bumper, fender, door panel, trunk lid, front panel, rear panel, roof panel, bonnet, pillar, side molding, garnish, wheel cap, bulge with hood, fuel lid, various types of spoilers, and the cowl of motor cycles.

Examples of the interior components of automobiles include an inner door handle, center panel, instrumental panel, console box, floor board of luggage carrier, and housing of a display of a car navigation system. The fields to which the PC/PET composite resin compositions produced by the methods according to the first to fourth aspects of the invention are applied are not limited to the above. Description of Embodiments

Embodiments of the invention will be hereinafter described in detail. The term "to" as used herein means that numerical values anterior and posterior to the symbol are included respectively as the lower limit and upper limit.

I. First Embodiment of the Invention

[I-1. Polycarbonate Resin]

Examples of a polycarbonate resin used for a PC/PET composite resin composition produced by the method of a first embodiment of the invention include an aromatic polycarbonate resin, aliphatic polycarbonate resin, and aromatic-aliphatic polycarbonate resin, and the aromatic polycarbonate resin is preferably employed.

The aromatic polycarbonate resin is an aromatic polycarbonate polymer which can be produced as a result of the reaction of aromatic hydroxy compounds with phosgene or carbonic acid diesters and which may be branched. A method for preparing the aromatic polycarbonate resin is not specifically limited, and traditional techniques may be employed, such as a phosgene method (interfacial polymerization technique) and a fusion method (transesterification technique). Furthermore, the aromatic polycarbonate resin may be a polycarbonate resin which is produced by the fusion method such that the quantity of an OH group at the terminal is adjusted.

Typical examples of aromatic dihydroxy compounds which are one of the materials of the aromatic polycarbonate resin used in the first embodiment of the invention include bis(4-hydroxyphenyl)methane, 2,2-bis(4-hydroxyphenyl)propane, 2,2-bis(4-hydroxy-3-methylphenyl)propane, 2,2-bis(4-hydroxy-3-t-butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, 1,1-bis(4-hydroxyphenyl)cyclohexane, 4,4'-dihydroxybiphenyl, 3,3',5,5'-tetramethyl-4,4'-dihydroxybiphenyl, bis(4-hydroxyphenyl)sulfone, bis(4-hydroxyphenyl)sulfide, bis(4-hydroxyphenyl)ether, and bis(4-hydroxyphenyl)ketone.

Furthermore, polyhydric phenol or the like having three or more hydroxy groups per molecule may be used in combination in a small amount so as to serve as a branching agent, such as 1,1,1-tris(4-hydroxylphenyl)ethane (THPE) and 1,3,5-tris(4-hydroxyphenyl)benzene.

Among these aromatic dihydroxy compounds, 2,2-bis(4-hydroxyphenyl)propane (hereinafter referred to as "bisphenol A" and abbreviated to "BPA", where appropriate) is preferably employed. These aromatic dihydroxy compounds may be used alone or in combination of two or more.

In order to produce a branched aromatic polycarbonate resin, polyhydroxy compounds such as phloroglucin, 4,6-dimethyl-2,4,6-tris(4-hydroxyphenyl)heptene-2, 4,6-dimethyl-2,4,6-tris(4-hydroxyphenyl)heptane, 2,6-dimethyl-2,4,6-tris(4-hydroxyphenyl)heptene-3, 1,3,5-tris(4-hydroxyphenyl)benzene, and 1,1,1-tris(4-hydroxyphenyl)ethane or materials such as 3,3-bis(4-hydroxyaryl)oxyindole(=isatin bisphenol), 5-chloroisatin, 5,7-dichloroisatin, and 5-bromoisatin may be used as a moiety of the aromatic dihydroxy compound. These materials are each used in an amount that is in the range from 0.01 to 10 mol% relative to the hydroxy compound, preferably in the range from 0.1 to 2 mol%.

In the polymerization by a transesterification technique, carbonic acid diesters are used as a monomer in place of phosgene. Typical examples of the carbonic acid diesters include substituted diaryl carbonate typified by diphenyl carbonate, ditolyl carbonate, or the like; and dialkyl carbonate typified by dimethyl carbonate, diethyl carbonate, di-tert-butyl carbonate, or the like. Such carbonic acid diesters may be used alone or in combination of two or more. Among these, diphenyl carbonate (hereinafter abbreviated to "DPC", where appropriate) and substituted diphenyl carbonate are preferably employed.

The carbonic acid diesters may be substituted with dicarboxylic acid or dicarboxylate preferably in a moiety of 50 mol% or lower, further preferably in a moiety of 30 mol% or lower. Typical examples of the dicarboxylic acid or dicarboxylate include terephthalic acid, isophthalic acid, diphenyl terephthalate, and diphenyl isophthalate. In the case where the carbonic acid diesters are substituted with such dicarboxylic acid or dicarboxylate, polyester carbonate can be produced.

In the case where the aromatic polycarbonate is produced by the transesterification technique, a catalyst is generally used. Examples of the catalyst to be used include, but are not limited to, basic compounds such as alkali metal compounds, alkaline earth metal compounds, basic boron compounds, basic phosphorus compounds, basic ammonium compounds, and amine compounds. In particular, alkali metal compounds and/or alkaline earth metal compounds are especially preferably employed. These compounds may be used alone or in combination of two or more. In the transesterification technique, the polymerization catalyst is generally deactivated by p-toluenesulfonate or the like.

Preferable examples of the aromatic polycarbonate resin include polycarbonate resins derived from 2,2-bis(4-hydroxyphenyl)propane and polycarbonate copolymers derived from 2,2-bis(4-hydroxyphenyl)propane and other aromatic dihydroxy compounds. In order to impart flame resistance or the like, a polymer or oligomer having a siloxane structure may be copolymerized. The aromatic polycarbonate resin may be a mixture of two or more polymers and/or copolymers individually produced from different materials, and a branched structure may account for an at most 0.5 mol% moiety of the aromatic polycarbonate resin.

The terminal hydroxyl group content of the polycarbonate resin has large influence on the thermal stability, hydrolytic stability, color tone, or the like of a molded article. In order to impart practical physical properties, the terminal hydroxyl group content is generally in the range from 30 to 2000 ppm, preferably in the range from 100 to 1500 ppm, and further preferably in the range from 200 to 1000 ppm. Examples of an end-capping agent to be used include p-tert-butylphenol, phenol, cumylphenol, and p-long-chain alkyl substituted phenol, the end-capping agent serving to adjust the terminal hydroxyl group content.

The aromatic dihydroxy compound may be contained as a residual monomer in the polycarbonate resin in an amount of 150 ppm or lower, preferably 100 ppm or lower, and further preferably 50 ppm or lower. In the case of preparation by the transesterification technique, the carbonic acid diester may be contained in an amount of 300 ppm or lower, preferably 200 ppm or lower, and further preferably 150 ppm or lower.

The molecular weight of the polycarbonate resin is not specifically limited. On the basis of viscosity-average molecular weight converted from the viscosity of a solution in which methylene chloride is used as a solvent, the polycarbonate resin has a molecular weight that is preferably in the range from 10,000 to 50,000, more preferably in the range from 11,000 to 40,000, and especially preferably in the range from 12,000 to 30,000, the viscosity of the solution being measured at a temperature of 20°C. In the case where the viscosity-average molecular weight is greater than or equal to 10,000, mechanical properties are further effectively exhibited. In the case where the viscosity-average molecular weight is 50,000 or lower, molding can further easily performed. Furthermore, two polycarbonate resins individually having different viscosity-average molecular weights may be mixed, and a polycarbonate resin having a viscosity-average molecular weight beyond the above preferred ranges may be mixed such that the above molecular weight ranges are satisfied.

[1-2. Polyethylene Terephthalate Resin]

The polyethylene terephthalate resin used in the first embodiment of the invention has an oxyethyleneoxyterephthaloyl unit (hereinafter referred to as "ET unit", where appropriate) including terephthalic acid and ethylene glycol in a proportion (hereinafter referred to as "ET proportion", where appropriate) of preferably 90 equivalent% or larger of the entire repeating unit. The polyethylene terephthalate resin used in the first embodiment of the invention may contain a repeating unit other than the ET unit in a proportion less than 10 equivalent%. Although the polyethylene terephthalate resin used in the first embodiment of the invention is produced from primary materials such as terephthalic acid or lower alkyl ester thereof and ethylene glycol, other acid components and/or other glycol components may be used in combination as materials.

Examples of the acid components other than the terephthalic acid include phthalic acid; isophthalic acid; naphthalene dicarboxylic acid; 4,4'-diphenylsulfone dicarboxylic acid; 4,4'-biphenyl dicarboxylic acid; 1,4-cyclohexane dicarboxylic acid; 1,3-phenylene dioxydiacetic acid; structural variants of these acid components; dicarboxylic acids, such as malonic acid, succinic acid, and adipic acid, and derivatives thereof; and hydroxy acids, such as p-hydroxybenzoate and glycolic acid, and derivatives thereof.

Examples of diol components other than ethylene glycol include aliphatic glycols such as 1,2-propanediol, 1,3-propanediol, 1,4-butanediol, pentamethylene glycol, hexamethylene glycol, and neopentyl glycol; alicyclic glycol such as cyclohexane dimethanol; and derivatives of aromatic dihydroxy compounds, such as bisphenol A and bisphenol S.

The above materials including the terephthalic acid or ester-forming derivatives thereof and including ethylene glycol are used to produce bis($\beta$-hydroxyethyl)terephthalate and/or oligomers thereof through an esterification reaction or a transesterification reaction in the presence of an esterification catalyst or a transesterification catalyst, and melt polymerization is then conducted in the presence of a polycondensation catalyst and a stabilizer under high temperature and reduced pressure, thereby producing a polymer.

Because the terephthalic acid functions as an autocatalyst of the transesterification reaction, the esterification catalyst does not need to be particularly used. Furthermore, the transesterification reaction can be also advanced in the presence of both of the esterification catalyst and a polycondensation catalyst which will be hereinafter described and can be advanced in the presence of small amount of inorganic acid or the like. Examples of a transesterification catalyst preferably used include alkali metal salts of sodium, lithium, or the like; alkaline earth metal salts of magnesium, calcium, or the like; and metallic compounds of zinc, manganese, or the like. Among these, in terms of the appearance of the polyethylene terephthalate resin to be produced, manganese compounds are especially preferably used.

Compounds soluble to a reaction system, such as germanium compounds, antimony compound, titanium compounds, cobalt compounds, and tin compounds, are used alone or in combination as the polycondensation catalyst. In terms of color tone, transparency, or the like, germanium dioxide is especially preferably used as the polycondensation catalyst. A stabilizer may be used together with these polycondensation catalysts to suppress a decomposition reaction during polymerization. Examples of the stabilizer include one or more phosphorus compounds selected from: phosphates such as trimethyl phosphate, triethyl phosphate, and triphenyl phosphate; phosphites such as triphenyl phosphite and trisdodecyl phosphite; acid phosphate such as methyl acid phosphate, dibutyl phosphate, monobutyl phosphate; phosphoric acid; phosphorous acid; hypophosphorous acid; and polyphosphoric acid.

On the basis of the weight of metal in the catalyst, the above catalyst is contained in the entire polymerization materials in an amount that is generally in the range from 1 to 2000 ppm, preferably in the range from 3 to 500 ppm. On the basis of the weight of phosphorus atoms in the stabilizer, the stabilizer is contained in the entire polymerization materials in an amount that is generally in the range from 10 to 1000 ppm, preferably in the range from 20 to 200 ppm. The catalyst and the stabilizer can be fed not only at the time of preparing material slurry but in an appropriate step in the esterification reaction or transesterification reaction. Furthermore, the catalyst and the stabilizer can be fed in an initial stage in a process of the polycondensation reaction.

During the esterification reaction or the transesterification reaction, a reaction temperature is generally in the range from 240 to 280°C, and reaction pressure as a relative pressure to air is generally in the range from 0.2 to 3 kg/cm$^2$G (20 to 300 kPa). Furthermore, during the polycondensation, a reaction temperature is generally in the range from 250 to 300°C, and reaction pressure as absolute pressure is generally in the range from 500 to 0.1 mmHg (67 to 0.013 kPa). Such an esterification or transesterification reaction and such a polycondensation reaction may be conducted in a single step or in multiple steps. The polyethylene terephthalate resin which can be produced in the manner described above exhibits a limiting viscosity that is generally in the range from 0.45 to 0.70 dl/g and is formed into a chip by a common method. The chip has an average particle diameter that is generally in the range from 2.0 to 5.5 mm, preferably in the range from 2.2 to 4.0 mm.

In general, the polymer produced through the melt polycondensation as described above is subsequently subjected to solid state polymerization. A polymer chip to be subjected to the solid state polymerization may be preliminarily crystallized as a result of being heated in advance to a temperature lower than a temperature at which the solid state polymerization is conducted and may be then subjected to the solid state polymerization. Such preliminary crystallization can be conducted by any of the following processes: (a) a process in which a dried polymer chip is heated for a time period from 1 minutes to 4 hours at a temperature that is generally in the range from 120 to 200°C, preferably in the range from 130 to 180°C; (b) a process in which a dried polymer chip is heated under a vapor or vapor-containing inert gas atmosphere for at least one minute at a temperature that is generally in the range from 120 to 200°C; and (c) a process in which a polymer chip that has been subjected to moisture absorption under a water, vapor, or vapor-containing inert gas atmosphere for moisture control is heated for at least one minutes at a temperature that is generally in the range from 120 to 200°C. The moisture of the polymer chip is controlled such that moisture is contained in the polymer chip in an amount that is in the range from 100 to 10000 ppm, preferably in the range from 1000 to 5000 ppm. The moisture-controlled polymer chip is subjected to the crystallization and solid state polymerization, thereby being able to further decrease the amount of acetaldehyde contained in PET and the amount of impurities slightly contained.

The solid state polymerization has at least one step and is conducted in the flow of an inert gas, such as nitrogen, argon, or carbon dioxide gas, under conditions including: a polymerization temperature that is generally in the range from 190 to 230°C, preferably in the range from 195 to 225°C; and a polymerization pressure that is generally in the range from 1 kg/cm$^2$G to 10 mmHg (absolute pressure from 200 to 1.3 kPa), preferably in the range from 0.5 kg/cm$^2$G to 100 mmHg (absolute pressure from 150 to 13 kPa). Higher temperature enables time taken for the solid state polymerization to be further reduced, and the time is generally in the range from 1 to 50 hours, preferably 5 to 30 hours, and further preferably in the range from 10 to 25 hours. The polymer which is produced through the solid state polymerization has a limiting viscosity that is generally in the range from 0.70 to 0.90 dl/g.

The intrinsic viscosity [η] of the polyethylene terephthalate resin used in the first embodiment of the invention may be appropriately determined, and it is preferable that the intrinsic viscosity [η] is generally in the range from 0.6 to 1.5 dl/g, and especially in the range from 0.7 to 1.0 dl/g. In the case where the intrinsic viscosity [η] is 0.5 dl/g or larger, especially 0.7 dl/g or larger, the resin composition produced by the method of the first embodiment of the invention is likely to have improvement in mechanical properties, stability in thermal preservation, chemical resistance, and resistance to heat and humidity, and such ranges are therefore preferably employed. On the other hand, in the case where the intrinsic viscosity is less than 2 dl/g, especially less than 1.0 dl/g, the fluidity of the resin composition is likely to be enhanced, and such ranges are therefore preferably employed.

In the first embodiment of the invention, the intrinsic viscosity of the polyethylene terephthalate resin is measured at a temperature of 30°C by using a mixed solvent of phenol/tetrachloroethane (weight ratio of 1/1).

The terminal carboxyl group is preferably contained in the polyethylene terephthalate resin used in the first embodiment of the invention in a concentration that is generally in the range from 1 to 60 μeq/g, particularly in the range from 3 to 50 μeq/g, and especially in the range from 5 to 40 μeq/g. In the case where the terminal carboxyl group is contained in a concentration of 60 μeq/g or smaller, the resin composition is likely to have improvement in mechanical properties. On the other hand, in the case where the terminal carboxyl group is contained in a concentration of 1 μeq/g or larger, the resin composition is likely to have improvement in thermal resistance, stability in thermal preservation, and color phase. Such ranges are therefore preferably employed.

Meanwhile, the concentration of the terminal carboxyl group contained in the polyethylene terephthalate resin can be obtained through the following processes: the polyethylene terephthalate resin of 0.5 g is dissolved in benzyl alcohol of 25 ml; and the resultant solution is titrated by using a solution of a sodium hydroxide in benzyl alcohol of 0.01 mol/L.

The polyethylene terephthalate resin used in the first embodiment of the invention is produced as a result of deactivating the polycondensation catalyst of the polyethylene terephthalate resin described above. A method for deactivating the polycondensation catalyst used for the polyethylene terephthalate resin is as defined in the claims. The following deactivation treatment can be, for example, employed.

Polycondensation Catalyst-deactivating Method 1: Hot-water (vapor) Treatment of Germanium Catalyst

A method by which a germanium catalyst contained in the polyethylene terephthalate resin is deactivated as a result of subjecting the polyethylene terephthalate resin to hot-water (vapor) treatment.

In particular, the polyethylene terephthalate resin is put into a container, and the polyethylene terephthalate resin is subjected to vapor treatment in which vapor at a temperature from 70 to 150°C, for example 100°C, is allowed to flow to the polyethylene terephthalate resin for 5 to 6000 minutes in an amount that is in the range from 1 to 100 weight% per hour. The resultant polyethylene terephthalate resin is then dried.

The polyethylene terephthalate resin is immersed into distilled water of 0.3 to 10 times the amount of the polyethylene terephthalate resin by weight in a container, the container into which the polyethylene terephthalate resin and the distilled water have been put are then externally heated, and hot-water treatment is conducted in the manner in which an inside temperature is controlled to a range from 70 to 110°C and held for 3 to 3000 minutes. The resultant product is then dehydrated and is subsequently dried.

The drying is generally performed under an inert gas atmosphere, such as nitrogen, at a temperature from 120 to 180°C for 3 to 8 hours.

Polycondensation Catalyst-deactivation Method 2: Addition of Phosphorous Compound to Titanium Catalyst

A phosphorous compound is added to the polyethylene terephthalate resin, thereby deactivating a titanium catalyst contained in the polyethylene terephthalate resin. In this case, on the basis of the weight of the polyethylene terephthalate, the phosphorus atoms are added in an amount that is preferably in the range from 7 to 145 ppm. In the case where the additive amount of the phosphorus atoms is less than 7 ppm, the catalyst is not sufficiently deactivated, and an advantageous effect as the object to be accomplished by the first embodiment of the invention may not be therefore provided. In the case where the additive amount of the phosphorus atoms is greater than 145 ppm, the phosphorous compound itself is formed into coarse agglomerated particles, and problems arise, such as the occurrence of defective appearance and reduced impact resistance.

As the phosphorous compound to be added, the phosphonate compounds represented from the following formula (2) are employed.

$$R^1OC(O)XP(O)(OR^2)_2... \qquad (2)$$

[In the formula, $R^1$ and $R^2$ are each an alkyl group having one to four carbon atoms, X represents $-CH_2-$ or $-CH(Y)-$ (Y represent a phenyl group), and $R^1$ and $R^2$ may be the same or different.]

Preferred examples of the phosphonate compounds represented from the formula (2) include alkyl phosphonate compounds. Among the alkyl phosphonate compounds, triethyl phosphonoacetate is preferably employed. These compounds may be used alone or in combination of two or more.

The above methods for deactivating the polycondensation catalyst contained in the polyethylene terephthalate resin are an example of the deactivation method to be employed in the first embodiment of the invention, and the deactivation method to be employed in the first embodiment of the invention is not limited to the above example at all.

Polyethylene terephthalate resin in which the polycondensation catalyst is deactivated is hereinafter referred to as "deactivated PET", and polyethylene terephthalate resin which is not subjected to the deactivation treatment is hereinafter referred to as "untreated PET".

In a preferable deactivated PET used in the first embodiment of the invention, the polycondensation catalyst contained in the above polyethylene terephthalate resin is deactivated, thereby exhibiting a solid state polymerization rate Ks of 0.006 (dl/g·hr) or smaller, particularly 0.005 (dl/g·hr) or smaller, especially approximately in the range from 0.001 to 0.004 (dl/g·hr), the solid state polymerization rate Ks being obtained from the following formula (1).

$$\texttt{solid state polymerization rate Ks=([\eta]s-[\eta]m)/T...(1)}$$

In the formula, $[\eta]s$ represents the intrinsic viscosity (dl/g) of the polyethylene terephthalate resin which has been preserved under nitrogen flow at a temperature of 210°C for 3 hours, $[\eta]m$ represents the intrinsic viscosity (dl/g) of the polyethylene terephthalate resin which has been preserved under nitrogen flow at a temperature of 210°C for 2 hours, and T is 1 (hour). In other words, in the first embodiment of the invention, an intrinsic viscosity obtained after the preservation under nitrogen flow at a temperature of 210°C for 3 hours is defined as $[\eta]s$, an intrinsic viscosity obtained after the preservation under the conditions the same as above for two hours is defined as $[\eta]m$, and a solid state polymerization rate Ks obtained from the formula (1) based on these intrinsic viscosities is defined as the solid state polymerization rate Ks.

In the case where the deactivated PET exhibits a solid state polymerization rate Ks greater than 0.006 (dl/g·hr), the polymerization catalyst is insufficiently deactivated, and an advantageous effect in which the first embodiment of the invention serves to suppress the deterioration caused by thermal preservation cannot be sufficiently provided. The solid state polymerization rate Ks is, however, less likely to be excessively decreased and is therefore 0.001 (dl/g·hr) or higher in general.

[1-3. Resin Component]

The resin component of the first embodiment of the invention contains at least one of the above polycarbonate resins in an amount that is in the range from 95 to 30 weight% and contains at least one of the above deactivated PETs in an amount that is in the range from 5 to 70 weight%.

In the cases where the polycarbonate resin is contained in the resin component in an amount which exceeds the upper limit of the range and where the deactivated PET is contained in an amount which falls below the lower limit of the range, an advantageous effect in which use of the PET enables chemical resistance to be enhanced cannot be sufficiently provided. To the contrary, in the cases where the polycarbonate resin is contained in an amount which falls below the lower limit of the range and where the deactivated PET is contained in an amount which exceeds the upper limit of the range, properties inherent to the polycarbonate resin are impaired, and impact resistance and heat deflection temperature under load are reduced. Such ranges are not accordingly preferable.

The polycarbonate resin is preferably contained in an amount that is in the range from 90 to 40 weight%, and the deactivated PET is preferably contained in an amount that is in the range from 10 to 60 weight%. Furthermore, the polycarbonate resin is more preferably contained in an amount that is in the range from 85 to 60 weight%, and the deactivated PET is more preferably contained in an amount that is in the range from 15 to 40 weight%.

[I-4A. Thermal Stabilizer]

The resin composition produced by the method of the first embodiment of the invention needs to contain a phosphorus thermal stabilizer and/or a hindered phenol thermal stabilizer in addition to the above resin component. These specific thermal stabilizers are contained, thereby being able to further remarkably enhance an advantageous effect in which use of the deactivated PET as the polyethylene terephthalate resin serves to suppress the deterioration caused by thermal preservation. The resin composition having excellent resistance to the deterioration caused by thermal preservation can be therefore provided. In particular, the phosphorus thermal stabilizer can suppress the deterioration caused by heat by a function in which peroxide is decomposed, and the hindered phenol thermal stabilizer can suppress such deterioration by a function in which peroxide radicals are trapped.

The phosphorus thermal stabilizer is a phosphite or a phosphate.

Examples of phosphite includes triester, diester, and monoester of phosphorous acid, such as triphenyl phosphite, trisnonylphenyl phosphite, tris(2,4-di-tert-butylphenyl)phosphite, trinonyl phosphite, tridecyl phosphite, trioctyl phosphite, trioctadecyl phosphite, distearyl pentaerythritol diphosphite, tricyclohexyl phosphite, monobutyl diphenyl phosphite, monooctyl diphenyl phosphite, distearyl pentaerythritol diphosphite, bis(2,4-di-tert-butylphenyl)pentaerythritol phosphite, bis(2,6-di-tert-butyl-4-methylphenyl)pentaerythritol phosphite, and 2,2-methylene bis(4,6-di-tert-butylphenyl)octyl phosphite.

Examples of the phosphate include trimethyl phosphate, triethyl phosphate, tributyl phosphate, trioctyl phosphate, triphenyl phosphate, tricresyl phosphate, tris(nonylphenyl)phosphate, 2-ethylphenyl diphenyl phosphate, and tetrakis(2,4-di-tert-butylphenyl)-4,4-diphenyl phosphonite.

Examples of the phosphorus thermal stabilizer include phosphite compounds such as distearyl pentaerythritol diphosphite, bis(2,4-di-tert-butylphenyl)pentaerythritol phosphite, bis(2,6-di-tert-butyl-4-methylphenyl)pentaerythritol phosphite, and tris(2,4-di-tert-butylphenyl)phosphite. Among these, bis(2,6-di-tert-butyl-4-methylphenyl)pentaerythritol phosphite and tris(2,4-di-tert-butylphenyl)phosphite are especially preferably employed.

Examples of the hindered phenol thermal stabilizer include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl bis[3-(3,5-di-tert-butyl-4-hydroxyphenyl propionamide), 2,4-dimethyl-6-(1-methylpentadecyl)phenol, diethyl{[3,5-bis(1,1-dimethylethyl)-4-hydroxyphenyl]methyl}phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6-(1H, 3H, 5H)-trione, and 2,6-di-tert-butyl-4-(4,6-bis(octylthio)-1,3,5-triazine-2-ylamino)phenol.

In particular, pentaerythritol tetrakis[3-(3,5-di-tert-butyl-4-hydroxyphenyl)propionate] and octadecyl-3-(3,5-di-tert-butyl-4-hydroxyphenyl)propionate are preferably employed. These two phenol thermal stabilizers are commercially available under the trade names of "IRGANOX 1010" and "IRGANOX 1076" from Ciba Specialty Chemicals, Inc., respectively.

The phosphorus thermal stabilizers may be used alone or in combination of two or more. The hindered phosphorus thermal stabilizers may be also used alone or in combination of two or more. Furthermore, the phosphorus thermal stabilizer and the hindered phosphorus thermal stabilizer may be used in combination.

The phosphorus thermal stabilizer is used in an amount that is in the range from 0.01 to 0.5 parts by weight relative to the resin component of 100 parts by weight, preferably in the range from 0.02 to 0.2 parts by weight, the resin component containing the polycarbonate resin and the deactivated PET. The hindered phenol thermal stabilizer is used in an amount that is in the range from 0.01 to 1 parts by weight relative to the resin component of 100 parts by weight, preferably in the range from 0.05 to 0.2 parts by weight, the resin component containing the polycarbonate resin and the deactivated PET. In the case where these thermal stabilizers are used in an excessively small amount, an advantageous effect in which use of the thermal stabilizer enables the deterioration caused by thermal preservation to be suppressed cannot be sufficiently provided. In the case where these thermal stabilizers are used in an excessively large amount, such an effect comes to reach a limit, and economic efficiency cannot be provided. In the case where the phosphorus thermal stabilizer and the hindered phenol thermal stabilizer are used in combination, the thermal stabilizers are preferably used so as to satisfy the above respective content ranges in a total amount in the range from 0.07 to 0.4 parts by weight relative to the resin component of 100 parts by weight, the resin component containing the polycarbonate resin and the deactivated PET.

[1-5. Other Components]

In addition to the polycarbonate resin, deactivated PET, and thermal stabilizer, the resin composition produced by the method of the first embodiment of the invention may contain various other additives, which are contained in ordinary polycarbonate resin compositions, so as not to impair the advantageous effect provided by the first embodiment of the invention.

Examples of additives to be contained include antioxidants, mold-releasing agents, dyes and pigments, reinforcements, flame retardant, impact resistance improvers, ultraviolet absorbers, antistatic agents, antifog additives, lubricant·antiblocking agents, flow modifiers, plasticizers, dispersants, and antifungal agents. These additives may be used in combination of two or more. An example of additives preferably used for the resin composition produced by the method of the first embodiment of the invention will be hereinafter described in detail.

Examples of the mold-releasing agent include at least one compound selected from the group consisting of aliphatic carboxylic acid, esters of aliphatic carboxylic acid with alcohol, aliphatic hydrocarbon compounds having a number average molecular weight from 200 to 15000, and polysiloxane-based silicone oil.

Examples of the aliphatic carboxylic acid include aliphatic saturated or unsaturated monovalent, divalent, or trivalent carboxylic acid. In this case, the term "aliphatic carboxylic acid" means that alicyclic carboxylic acid is also included. In particular, monovalent or divalent carboxylic acid having 6 to 36 carbon atoms is employed as a preferred aliphatic carboxylic acid, and aliphatic saturated monovalent carboxylic acid having 6 to 36 carbon atoms is further preferably employed. Specific examples of such an aliphatic carboxylic acid include palmitic acid, stearic acid, caproic acid, capric acid, lauric acid, arachidic acid, behenic acid, lignoceric acid, cerotic acid, melissic acid, tetrariacontanoic acid, montanoic acid, adipic acid, and azelaic acid.

The aliphatic carboxylic acid the same as above can be used as the aliphatic carboxylic acid which forms ester with alcohol. On the other hand, examples of the alcohol include saturated or unsaturated monohydric or polyhydric alcohol. Such alcohol may contain substituents such as a fluorine atom and an aryl group. In particular, saturated monohydric or polyhydric alcohol having 30 or lower carbon atoms is preferably employed, and aliphatic saturated monohydric or polyhydric alcohol having 30 or lower carbon atoms is further preferably employed. In this case, the term "aliphatic" means that alicyclic compounds are also included. Specific examples of such alcohol include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol.

The above ester compounds may contain impurities such as aliphatic carboxylic acid and/or alcohol and may be each a mixture of a plurality of compounds.

Specific examples of the ester of aliphatic carboxylic acid with alcohol include beeswax (mixture primarily containing myricyl palmitate), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.

Examples of the aliphatic hydrocarbon having number average molecular weight from 200 to 15000 include liquid paraffin, paraffin wax, microcrystalline wax, polyethylene wax, Fischer-Tropsch wax, and $\alpha$-olefin oligomer having 3 to 12 carbon atoms. In this case, the term "aliphatic hydrocarbon" means that alicyclic hydrocarbon is also included. These hydrocarbon compounds may be partially oxidized. In particular, paraffin wax, polyethylene wax, or partially oxidized polyethylene wax is preferably employed, and paraffin wax or polyethylene wax is further preferably employed. A number average molecular weight is preferably in the range from 200 to 5000. These hydrocarbon compounds may be each a single material or may be each a mixture of various materials individually containing different components and having different molecular weights as long as the primary components satisfy the above ranges.

Examples of the polysiloxane-based silicone oil include dimethyl silicone oil, phenylmethyl silicone oil, diphenyl silicone oil, and fluorinated alkyl silicone. These may be used in combination of two or more.

The mold-releasing agent is contained in an amount that is generally in the range from 0.001 to 2 parts by weight relative to the total of the polycarbonate resin and deactivated PET in 100 parts by weight, preferably in the range from 0.01 to 1 parts by weight. In the case where the mold-releasing agent is contained in an amount less than 0.001 parts by weight, an effect provided by the mold-releasing agent may fall into insufficiency. In the case where the mold-releasing agent is contained in an amount greater than 2 parts by weight, problems arise, such as the decrease of hydrolysis resistance and pollution of a mold during injection molding.

Specific examples of the ultraviolet absorber include inorganic ultraviolet absorbers such as cerium oxide and zinc oxide and include organic ultraviolet absorbers such as benzotriazole compounds, benzophenone compounds, and triazine compounds. Among these ultraviolet absorbers, organic ultraviolet absorbers are preferably employed. In particular, preferred are at least one ultraviolet absorber selected from the group consisting of benzotriazole compounds, 2-(4,6-diphenyl-1,3,5-triazine-2-yl)-5-[(hexyl)oxy]-phenol, 2-[4,6-bis(2,4-dimethylphenyl)-1,3,5-triazine-2-yl]-5-(octyloxy)phenol, 2,2'-(1,4-phenylene)bis[4H-3,1-benzoxazine-4-one], and [(4-methoxyphenyl)-methylene]-propanedioic acid-dimethyl ester.

Specific examples of the benzotriazole compounds include a condensed product of methyl-3-[3-tert-butyl-5-(2H-benzotriazole-2-yl)-4-hydroxyphenyl]propionate-polyethylene glycol. Specific examples of the other benzotriazole compounds include 2-bis(5-methyl-2-hydroxyphenyl)benzotriazole, 2-(3,5-di-tert-butyl-2-hydroxyphenyl)benzotriazole, 2-(3',5'-di-tert-butyl-2'-hydroxyphenyl)-5-chlorobenzotriazole, 2-(3-tert-butyl-5-methyl-2-hydroxyphenyl)-5-chlorobenzotriazole, 2-(2'-hydroxy-5'-tert-octylphenyl)benzotriazole, 2-(3,5-di-tert-amyl-2-hydroxyphenyl)benzotriazole, 2-[2-hydroxy-3,5-bis($\alpha$, $\alpha$-dimethylbenzyl)phenyl]-2H-benzotriazole, 2,2'-methylene-bis[4-(1,1,3,3-tetramethylbutyl)-6-(2N-benzotriazole2yl)phenol], and a condensed product of [methyl-3-[3-tert-butyl-5-(2H-benzotriazole-2-yl)-4-hydroxyphenyl]propionate-polyethylene glycol]. These benzotriazole compounds may be used in combination of two or more.

Among these benzotriazole compounds, preferred are 2-(2'-hydroxy-5'-tert-octylphenyl)benzotriazole, 2-[2-hydroxy-3,5-bis($\alpha,\alpha$-dimethylbenzyl)phenyl]-2H-benzotriazole, 2-(4,6-diphenyl-1,3,5-triazine-2-yl)-5-[(hexyl)oxy]-phenol, 2-[4,6-bis(2,4-dimethylphenyl)-1,3,5-triazine-2-yl]-5-(octyloxy)phenol, and 2,2'-methylene-bis[4-(1,1,3,3-tetramethylbutyl)-6-(2N-benzotriazole-2-yl)phenol].

The ultraviolet absorber is contained in an amount that is generally in the range from 0.01 to 3 parts by weight relative to the total of the polycarbonate resin and deactivated PET in 100 parts by weight, preferably in the range from 0.1 to 1 parts by weight. In the case where the ultraviolet absorber is contained in an amount less than 0.01 parts by weight, an effect in which weather resistance is enhanced may fall into insufficiency. In the case where the ultraviolet absorber is contained in an amount greater than 3 parts by weight, a problem such as the occurrence of mold deposit is caused.

Examples of the dyes and pigments include inorganic pigments, organic pigments, and organic dyes. Examples of the inorganic pigments include carbon blacks; sulfide-based pigments such as cadmium red and cadmium yellow; silicate-based pigments such as ultramarine blue; oxide-based pigments such as zinc white, red iron oxide, chromium oxide, titanium oxide, iron black, titanium yellow, zinc/iron-based brown, titanium/cobalt-based green, cobalt green, cobalt blue, copper/chromium-based black, and copper/iron-based black; chromate-based pigments such as chrome yellow and molybdate orange; and ferrocyanide-based pigments such as Prussian blue. Examples of the organic pigments and organic dyes include phthalocyanine-based dyes and pigments such as copper phthalocyanine blue and copper phthalocyanine green; azo-based dyes and pigments such as nickel azo yellow; condensed polycyclic dyes and pigments such as thioindigo-based compounds, perynone-based compounds, perylene-based compounds, quinacridone-based compounds, dioxazine-based compounds, isoindolinone-based compounds, and quinaphthalone-based compounds; and anthraquinone-based, heterocyclic, and methyl-based dyes and pigments. These dyes and pigments may be used in combination of two or more. Among these dyes and pigments, in view of thermal stability, preferred are carbon blacks, titanium oxide, cyanine-based compounds, quinoline-based compounds, anthraquinone-based compounds, and phthalocyanine-based compounds.

The dyes and pigments are contained in an amount of generally 5 parts by weight or lower relative to the total of the polycarbonate resin and deactivated PET in 100 parts by weight, preferably 3 parts by weight or lower, and further preferably 2 parts by weight or lower. In the case where dyes and pigments are contained in an amount greater than 5 parts by weight, impact resistance may fall into insufficiency.

Examples of the flame retardant include halogen-based flame retardants such as polycarbonates of halogenated bisphenol A, brominated bisphenol-based epoxy resins, brominated bisphenol-based phenoxy resins, and brominated polystyrenes; phosphate-based flame retardants; organic metal salt-based flame retardants such as dipotassium diphenylsulphon-3,3'-disulphonate, potassium diphenylsulphon-3-sulphonate, and potassium perfluorobutane sulfonate; and polyorganosiloxane-based flame retardants. Among these, the phosphate-based flame retardants are especially preferably employed.

Examples of the phosphate-based flame retardants include triphenyl phosphate, resorcinol bis(dixylenylphosphate), hydroquinone bis(dixylenylphosphate), 4,4'-biphenol bis(dixylenylphosphate), bisphenol A bis(dixylenylphosphate), resorcinol bis(diphenylphosphate), hydroquinone bis(diphenylphosphate), 4,4'-biphenol bis(diphenylphosphate), and bisphenol A bis(diphenylphosphate). These phosphate-based flame retardants may be used in combination of two or more. Among these phosphate-based flame retardants, resorcinol bis(dixylenylphosphate) and bisphenol A bis(dixylenylphosphate) are preferably employed.

The flame retardant is contained in an amount that is generally in the range from 1 to 30 parts by weight relative to the total of the polycarbonate resin and deactivated PET in 100 parts by weight, preferably in the range from 3 to 25 parts by weight, and further preferably in the range from 5 to 20 parts by weight. In the case where the flame retardant is contained in an amount less than 1 parts by weight, flame resistance may fall into insufficiency. In the case where the flame retardant is contained in an amount greater than 30 parts by weight, thermal resistance may be decreased.

Examples of an anti-dropping agent include fluorinated polyolefin such as polyfluoroethylene. In particular, fibril-forming polytetrafluoroethylene is preferably employed. The fibril-forming polytetrafluoroethylene has tendency to be easily dispersed in a polymer and has tendency to serve to bond polymers to form a fibrous material. The fibril-forming polytetrafluoroethylene is classified as type 3 of the ASTM standard. One of the types which is in a solid state and one of the types which is in the form of an aqueous dispersant are also used as the polytetrafluoroethylene. Examples of the fibril-forming polytetrafluoroethylene which is commercially available include "Teflon (registered trademark) 6J" and "Teflon (registered trademark) 30J" each produced by DU PONT-MITSUI FLUOROCHEMICALS COMPANY, LTD. and include "POLYFRON (registered trademark)" produced by DAIKIN INDUSTRIES, LTD.

The anti-dropping agent is contained in an amount that is generally in the range from 0.02 to 4 parts by weight relative to the total of the polycarbonate resin and deactivated PET in 100 parts by weight, preferably in the range from 0.03 to 3 parts by weight. In the case where the anti-dropping agent is contained in an amount greater than 5 parts by weight, the appearance quality of a molded article may be degraded.

The resin composition produced by the method of the first embodiment of the invention may contain resin components other than the polycarbonate resin and deactivated PET and may contain rubber components. In this case, examples of the other resin components and rubber components include styrene-based resins such as an acrylonitrile-styrene copolymer, acrylonitrile-butadienestyrene copolymer, and polystyrene resin; polyolefin resins such as polyethylene resin and polypropylene resin; polyamide resins; polyimide resins; polyetherimide resins; polyurethane resins; polyphenylene ether resins; polyphenylene sulfide resins; polysulfone resins; polymethacrylate resins; phenolic resins; and epoxy resins. These other resin components or rubbers are preferably contained in an amount of 30 parts by weight or lower relative to the total of the polycarbonate resin and deactivated PET in 100 parts by weight, thereby sufficiently securing the advantageous effect provided by the combination use of the polycarbonate resin and deactivated PET.

The resin composition produced by the method of the first embodiment of the invention may contain glass-based fillers such as glass fiber (chopped strand), short glass fiber (milled fiber), glass flake, and glass bead; carbon-based fillers such as carbon fiber, short carbon fiber, carbon nanotube, and graphite; whiskers such as potassium titanate and aluminum borate; silicate compounds such as talc, mica, wollastonite, kaolinite, xonotlite, sepiolite, attapulgite, montmorillonite, bentonite, and smectite; and inorganic fillers such as silica, alumina, and calcium carbonate.

[1-6. Production Method of PC/PET Composite Resin Composition]

The PC/PET composite resin composition can be produced by any of appropriately selected known methods using the polycarbonate resin, deactivated PET, phosphorus thermal stabilizer and/or hindered phenol thermal stabilizer, and other additives which are optionally added.

In particular, the polycarbonate resin, deactivated PET, phosphorus thermal stabilizer and/or hindered phenol thermal stabilizer, and other additives which are optionally added are preliminarily mixed with each other by using various types of mixers such as a tumbling mixer and Henschel mixer. The resultant product was then fused and kneaded with a Banbury mixer, roller, Brabender mixer, single-screw kneading extruder, twin-screw kneading extruder, and kneader, thereby being able to produce the resin composition. Alternatively, the individual components are not preliminarily mixed, or only some of the components are mixed in advance. The resultant product is then fed to an extruder by using a feeder and is subsequently fused and kneaded, thereby being able to also produce the resin composition.

[1-7. Preferred Physical Properties of PC/PET Composite Resin Composition]

In the case where a preferred PC/PET composite resin composition produced by the method of the first embodiment of the invention has been preserved at a temperature of 280°C for 60 minutes, the number average molecular weight $Mn_x$ of a chloroform soluble matter is retained in a proportion of 80% or larger relative to the number average molecular weight $Mn_o$ of a chloroform soluble matter of the resin composition which is not preserved at a temperature of 280°C for 60 minutes. In other words, the number average molecular weight is retained after the thermal preservation in a proportion of 80% or larger, such a proportion being obtained from the formula of $Mn_x / Mn_o \times 100$. In the case where the proportion in which the number average molecular weight is retained is less than 80%, insufficiency may be generated in the advantageous effect which is provided by the first embodiment of the invention and in which the deterioration caused by the thermal preservation is suppressed, and the deterioration due to the thermal preservation is therefore problematically caused. The number average molecular weight is retained in a proportion of preferably 85% or larger, further preferably 90% or larger.

In a preferred PC/PET composite resin composition produced by the method of the first embodiment of the invention, Charpy impact strength $Ip_x$ which is exhibited after the resin composition is preserved at a temperature of 280°C for 60 minutes is 80% or more of Charpy impact strength $Ip_o$ which is exhibited before the resin composition is preserved at a temperature of 280°C for 60 minutes. In other words, Charpy impact strength is retained after the thermal preservation in a proportion of 80% or larger, such a proportion being obtained from the formula of $Ip_x/Ip_o \times 100$. In the case where the proportion in which the Charpy impact strength is retained is less than 80%, insufficiency may be generated in the advantageous effect which is provided by the first embodiment of the invention and in which the deterioration caused by the thermal preservation is suppressed, and the deterioration due to the thermal preservation is therefore problematically caused. The Charpy impact strength is retained in a proportion of preferably 85% or larger, further preferably 90% or larger.

The PC/PET composite resin composition produced by the method of the first embodiment of the invention preferably exhibits a Charpy impact strength $Ip_o$ of 8.0 $kJ/m^2$ or larger, particularly 10.0 $kJ/m^2$ or larger.

In the first embodiment of the invention, the values in the number average molecular weight and Charpy impact strength of the PC/PET composite resin composition are obtained by procedures which will be described in the section Examples.

In this case, in view of preset temperature in a cylinder which is generally used in injection molding using the PC/PET composite resin composition and in view of the longest preservation time which is generally supposed, the preservation conditions are determined as "temperature of 280°C and 60 minutes (1 hour)" in the evaluation of a proportion in which the number average molecular weight and Charpy impact strength of the PC/PET composite resin composition are retained. In addition, such conditions are based on the following assumption: if the resin composition is not problematically deteriorated resulting from being thermally preserved at a temperature of 280°C for 60 minutes, the deterioration due to the thermal preservation is less likely to be caused in general use.

[1-8. Production Method of Molded Article of PC/PET Composite Resin]

A method for producing a molded article from the PC/PET composite resin composition of the first embodiment of the invention is not specifically limited. Molding methods which are generally employed for thermoplastic resin can be used, such as a general injection molding method, ultra high-speed injection molding method, injection compression molding method, multicolor injection molding method, gas-assist injection molding method, molding method utilizing a heat-insulating mold, molding method utilizing a rapid heating and cooling mold, foam molding (including supercritical fluid), insert molding, in-mold coating molding (IMC) method, extrusion molding method, sheet molding method, thermal molding method, rotational molding method, lamination molding method, and press molding method. In addition, a molding method utilizing a hot runner technique can be also adopted as one of the various injection molding methods.

The PC/PET composite resin composition produced by the method of the first embodiment of the invention can be used in combination with another thermoplastic resin composition for multicolor molding, thereby being able to produce a composite molded article.

In the first embodiment of the invention, because the deactivated PET is used as the polyethylene terephthalate resin together with a specific thermal stabilizer, the resin composition which is produced as a result of compounding the polyethylene terephthalate resin with the polycarbonate resin is prevented from being deteriorated resulting from being thermally preserved, and the deterioration caused by the thermal preservation is prevented from problematically occurring during a molding process. In the cases where preservation temperature is excessively increased and where preservation time is excessively prolonged, however, the deterioration due to the thermal preservation may be caused. During a molding process using the PC/PET composite resin composition produced by the method of the first embodiment of the invention, accordingly, the resin composition is preferably preserved at a temperature of 280°C or lower for 60 minutes or shorter.

II. Second Embodiment of the Invention

[II-1. Polycarbonate Resin]

The description which has been made in the part [I-1. Polycarbonate Resin] of the section I. First embodiment of the invention is applied to a polycarbonate resin used for the method for producing a PC/PET composite resin composition of a second embodiment of the invention.

[II-2. Polyethylene Terephthalate Resin]

The description which has been made in the part [1-2. Polyethylene Terephthalate Resin] of the section I. First embodiment of the invention is applied to a polyethylene terephthalate resin used for the method for producing the PC/PET composite resin composition of the second embodiment of the invention.

[II-3. Resin Component]

The description which has been made in the part [1-3. Resin Component] of the section I. First embodiment of the invention is applied to a resin component used for the method for producing the PC/PET composite resin composition of the second embodiment of the invention.

[II-4A. Thermal Stabilizer]

The description which has been made in the part [I-4A. Thermal Stabilizer] of the section I. First embodiment of the invention is applied to a thermal stabilizer used for the method for producing the PC/PET composite resin composition of the second embodiment of the invention.

[II-4B. Elastomer]

The PC/PET composite resin composition produced by the method of the second embodiment of the invention contains an elastomer in an amount that is in the range from 1 to 10 parts by weight relative to the resin component of 100 parts by weight, the resin component containing the polycarbonate resin and deactivated PET. A specific elastomer is preferably contained, thereby being able to suppress the increase of the viscosity of the resin composition during the thermal preservation. In particular, the amount and component of the elastomer are selected with the result that the elastomer is prevented from being agglomerated during the thermal preservation, thereby suppressing the increase of viscosity due to the agglomeration. A function to enhance molding stability is therefore provided.

The elastomer used in the second embodiment of the invention is a rubber polymer having a glass transition temperature of 0°C or lower, particularly -20°C or lower, or is a copolymer which is produced as a result of copolymerizing a monomeric component which can be copolymerized with the rubber polymer. Typically known elastomers can be optionally used, which can be generally contained in the polycarbonate resin composition or the like to improve the mechanical properties thereof.

Examples of the elastomer include polybutadiene; polyisoprene; diene copolymers (such as styren·butadiene copolymer, acrylonitrile·butadiene copolymer, and acryl·butadiene rubber); copolymers of ethylene and $\alpha$-olefin (such as ethylene·propylene copolymer, ethylene·butene copolymer, and ethylene·octene copolymer); copolymers of ethylene and unsaturated carboxylate (such as ethylene·methacrylate copolymer and ethylene·butylacrylate copolymer); copolymers of ethylene and aliphatic vinyl compounds; terpolymers of ethylene, propylene, and nonconjugated diene; acrylic rubbers [such as polybutyl acrylate, poly(2-ethylhexyl acrylate), and butyl acrylate·2-ethylhexyl acrylate copolymer]; and silicone-based rubbers [such as polyorganosiloxane rubber and IPN-type composite rubber containing polyorganosiloxane rubber and polyalkyl(meth)acrylate rubber]. These elastomers may be used alone or in combination of two or more. Meanwhile, the term "(meth)acrylate" means "acrylate" and "methacrylate", and the term "(meth)acrylic acid" which will be hereinafter mentioned means "acrylic acid" and "methacrylic acid".

Preferred examples of monomeric components which are appropriately copolymerized with the elastomer include aromatic vinyl compounds, vinyl cyanide compounds, (meth)acrylate compounds, and (meth)acrylic acid compounds. Examples of the other monomeric components include epoxy group-containing (meth)acrylate compounds such as glycidyl(meth)acrylate; maleimide compounds such as maleimide, N-methylmaleimide, and N-phenylmaleimide; and $\alpha$, $\beta$-unsaturated carboxylate compounds of maleic acid, phthalic acid, itaconic acid, or the like and anhydrides thereof such as maleic anhydride. These monomeric components may be also used alone or in combination of two or more.

In order to enhance the molding stability of the resin composition produced by the method of the second embodiment of the invention, graft copolymer elastomers with a core/shell structure are preferably used as the elastomer in particular. Particularly preferred graft copolymer elastomers with a core/shell structure has a core layer and a shell layer, the core layer being formed by using at least one rubber polymer selected from butadiene-containing rubber, butylacrylate-containing rubber, 2-ethylhexyl acrylate-containing rubber, and silicone-based rubber, and a shell layer being formed around the core layer as a result of copolymerizing at least one monomeric component selected from acrylate, methacrylate, and aromatic vinyl compounds. In more particular, examples of such elastomers include core/shell elastomers with a shell layer having a polymethylmethacrylate (PMMA)-based polymer or copolymer block, such as methyl methacrylate-butadiene-styrene polymer (MBS), methyl methacrylate-acrylonitrile-butadiene-styrene polymer (MABS), methyl methacrylate-butadiene polymer (MB), methyl methacrylate-acryl rubber polymer (MA), methyl methacrylate-acryl·butadiene rubber copolymer, methyl methacrylate-acryl·butadiene rubber-styrene copolymer, and methyl methacrylate-[acryl·silicone interpenetrating polymer network (IPN) rubber] copolymer.

Examples of such core/shell elastomers include products commercially available from Rohm and Haas Japan K.K., such as EXL series including PARALOIDs EXL2315, EXL2602, and EXL2603, KM series including KM330 and KM336P, and KCZ series including KCZ201, and include products commercially available from MITSUBISHI RAYON CO., LTD., such as METABLENs S-2001 and SRK-200.

Other specific examples of the rubber copolymer which is produced as a result of copolymerizing the rubber polymer with the monomeric component copolymerizable therewith include polybutadiene rubber, styrene-butadiene copolymer (SBR), styrene-butadiene-styrene block copolymer (SBS), styrene-ethylene/butylene-styrene block copolymer (SEBS), styrene-ethylene/propylene-styrene block copolymer (SEPS), ethylene-ethyl acrylate copolymer (EEA), and ethylene-methylacrylate copolymer (EMA).

These elastomers may be used alone or in combination of two or more.

The elastomer is contained in the PC/PET composite resin composition produced by the method of the second embodiment of the invention in an amount that is in the range from 1 to 10 parts by weight relative to the resin component of 100 parts by weight, preferably in the range from 2 to 9 weight%, and more preferably in the range from 3 to 8 weight%, the resin component containing the polycarbonate resin and the deactivated PET.

In the case where the elastomer is contained in an amount which falls below the lower limit of the above ranges, advantageous effect in which addition of the elastomer contributes to enhancing impact resistance and molding stability cannot be sufficiently provided. In the case where the elastomer is contained in an amount which exceeds the upper limit of the above ranges, thermal stability and rigidity may fall into insufficiency.

[II-5. Other Components]

In addition to the polycarbonate resin, deactivated PET, thermal stabilizer, and elastomer, the resin composition produced by the method of the second embodiment of the invention may contain various other additives, which are contained in ordinary polycarbonate resin compositions, so as not to impair the advantageous effect provided by the second embodiment of the invention.

The description which has been made in the part [I-5. Other Components] of the section I. First embodiment of the invention is applied to such other additives to be contained.

[II-6. Production Method of PC/PET Composite Resin Composition]

The PC/PET composite resin composition can be produced by any of appropriately selected known methods using the polycarbonate resin, deactivated PET, elastomer, phosphorus thermal stabilizer and/or hindered phenol thermal stabilizer, and other additives which are optionally added.

In particular, the polycarbonate resin, deactivated PET, elastomer, phosphorus thermal stabilizer and/or hindered phenol thermal stabilizer, and other additives which are optionally added are preliminarily mixed with each other by using various types of mixers such as a tumbling mixer and Henschel mixer. The resultant product was then fused and kneaded with a Banbury mixer, roller, Brabender mixer, single-screw kneading extruder, twin-screw kneading extruder, and kneader, thereby being able to produce the resin composition. Alternatively, the individual components are not preliminarily mixed, or only some of the components are mixed in advance. The resultant product is then fed to an extruder by using a feeder and is subsequently fused and kneaded, thereby being able to also produce the resin composition.

[II-7. Preferred Physical Properties of PC/PET Composite Resin Composition]

In the case where a preferred PC/PET composite resin composition produced by the method of the second embodiment of the invention has been preserved at a temperature of 280°C for 60 minutes, the number average molecular weight $Mn_x$ of a chloroform soluble matter is retained in a proportion of 80% or larger relative to the number average molecular weight $Mn_o$ of a chloroform soluble matter of the resin composition which is not preserved at a temperature of 280°C for 60 minutes. In other words, the number average molecular weight is retained after the thermal preservation in a proportion of 80% or larger, such a proportion being obtained from the formula of $Mn_x/Mn_o \times 100$. In the case where the proportion in which the number average molecular weight is retained is less than 80%, insufficiency may be generated in the advantageous effect which is provided by the second embodiment of the invention and in which the deterioration caused by the thermal preservation is suppressed, and the deterioration due to the thermal preservation is therefore problematically caused. The number average molecular weight is retained in a proportion of preferably 85% or larger, further preferably 90% or larger.

In a preferred PC/PET composite resin composition produced by the method of the second embodiment of the invention, Charpy impact strength $Ip_x$ which is exhibited after the resin composition is preserved at a temperature of 280°C for 60 minutes is 80% or more of Charpy impact strength $Ip_o$ which is exhibited before the resin composition is preserved at a temperature of 280°C for 60 minutes. In other words, Charpy impact strength is retained after the thermal preservation in a proportion of 80% or larger, such a proportion being obtained from the formula of $Ip_x/Ip_o \times 100$. In the case where the proportion in which the Charpy impact strength is retained is less than 80%, insufficiency may be generated in the advantageous effect which is provided by the second embodiment of the invention and in which the deterioration caused by the thermal preservation is suppressed, and the deterioration due to the thermal preservation is therefore problematically caused. The Charpy impact strength is retained in a proportion of preferably 85% or larger, further preferably 90% or larger.

The PC/PET composite resin composition produced by the method of the second embodiment of the invention preferably exhibits a Charpy impact strength $Ip_o$ of 15.0 kJ/m$^2$ or larger, particularly 20.0 kJ/m$^2$ or larger.

In a preferred PC/PET composite resin composition produced by the method of the second embodiment of the invention, assuming that the MFR of a molded article which is produced as a result of conducting injection-molding after the resin composition is preserved at a temperature of 280°C for 30 minutes is $[R_x]$ and assuming that the MFR of a molded article which is produced as a result of conducting injection-molding immediately after the resin composition is put into an injection machine is $[R_o]$, the decreasing rate of the MFR$[R_x]$ relative to the MFR$[R_o]$ is obtained from the following formula (3) and is in the range from -20 to 20%

$$\texttt{decreasing rate of MFR[\%]=([R_o]-[R_x])/[R_o]×100...(3)}$$

In the second embodiment of the invention, the resin composition is preserved for 30 minutes in a cylinder having a cylinder temperature of 280°C, a molded article is then produced by injection molding at the same cylinder temperature (hereinafter referred to as "injection molding", simply), and the MFR of the molded article is defined as $[R_x]$. Furthermore, the resin composition is put into a cylinder having a temperature of 280°C, a molded article is then produced by injection molding immediately after the resin composition is put into the cylinder in an amount adequate to the injection molding, and the MFR of the molded article is defined as $[R_o]$. The decreasing rate of the MFR is obtained from the formula (3) by using these values. In this case, an injection molding machine "Type M150AII-SJ" commercially available from MEIKI CO., LTD. is used.

In the cases where the decreasing rate of the MFR is larger than 20% or is less than -20%, the fluidity of the resin composition is significantly varied with time during the injection molding, and the injection molding is therefore less likely to be conducted under the same conditions. Defective molding such as the occurrence of short shot and mold flash is accordingly caused.

The decreasing rate of the MFR is preferably in the range from -10% to 10% in particular.

In the second embodiment of the invention, the values in the number average molecular weight, Charpy impact strength, MFR, and the like of the PC/PET composite resin composition are obtained by procedures which will be described in the section Examples.

In this case, in view of the highest preservation temperature and the longest preservation time in a cylinder during general injection molding using the PC/PET composite resin composition, the preservation conditions are defined as "temperature of 280°C and 60 minutes (1 hour)" in the evaluation of the number average molecular weight and Charpy impact strength of the PC/PET composite resin composition as described above. In addition, such conditions are based on the following assumption: if the resin composition is not problematically deteriorated resulting from being thermally preserved at a temperature of 280°C for 60 minutes, the deterioration due to the thermal preservation is less likely to be caused in general use.

Furthermore, the preservation conditions in the evaluation of the decreasing rate of the MFR are defined as "temperature of 280°C and 30 minutes" for the following reason: the increase of viscosity is caused by agglomeration of the high-viscosity elastomers contained in the resin composition after the passage of approximately 15 to 30 minutes from the start of the preservation in a molding machine; the increase of viscosity is subsequently counteracted by the decrease of viscosity due to the decrease of the molecular weight of the polycarbonate resin; changes in molding properties are therefore likely to be decreased in appearance; and preservation time most adequate to the evaluation is consequently 30 minutes.

[II-8. Production Method of Molded Article of PC/PET Composite Resin]

A method for producing a molded article from the PC/PET composite resin composition of the second embodiment of the invention is not specifically limited. Molding methods which are generally employed for thermoplastic resin can be used, such as a general injection molding method, ultra high-speed injection molding method, injection compression molding method, multicolor injection molding method, gas-assist injection molding method, molding method utilizing a heat-insulating mold, molding method utilizing a rapid heating and cooling mold, foam molding (including supercritical fluid), insert molding, in-mold coating molding (IMC) method, extrusion molding method, sheet molding method, thermal molding method, rotational molding method, lamination molding method, and press molding method. In addition, a molding method utilizing a hot runner technique can be also adopted as one of the various injection molding methods.

The PC/PET composite resin composition produced by the method of the second embodiment of the invention can be used in combination with another thermoplastic resin composition for multicolor molding, thereby being able to produce a composite molded article.

In the second embodiment of the invention, because the deactivated PET as the polyethylene terephthalate resin and a specific thermal stabilizer are used together with a specific amount of elastomer, the resin composition which is produced as a result of compounding the polyethylene terephthalate resin with the polycarbonate resin is prevented from being deteriorated resulting from being thermally preserved, and the deterioration caused by the thermal preservation is prevented from problematically occurring during a molding process. In the cases where preservation temperature is excessively increased and where preservation time is excessively prolonged, however, the deterioration due to the thermal preservation may be caused. During a molding process using the PC/PET composite resin composition produced by the method of the second embodiment of the invention, accordingly, the resin composition is preferably preserved at a temperature of 280°C or lower for 60 minutes or shorter.

III. Third Embodiment of the Invention

[III-1. Polycarbonate Resin]

The description which has been made in the part [I-1. Polycarbonate Resin] of the section I. First embodiment of the invention is applied to a polycarbonate resin used for the method for producing a PC/PET composite resin composition of a third embodiment of the invention.

[III-2. Polyethylene Terephthalate Resin]

The description which has been made in the part [1-2. Polyethylene Terephthalate Resin] of the section I. First embodiment of the invention is applied to a polyethylene terephthalate resin used for the method for producing the PC/PET composite resin composition of the third embodiment of the invention.

[III-3. Resin Component]

The description which has been made in the part [1-3. Resin Component] of the section I. First embodiment of the invention is applied to a resin component used for the method of producing the PC/PET composite resin composition of the third embodiment of the invention.

[III-4A. Thermal Stabilizer]

The description which has been made in the part [I-4A. Thermal Stabilizer] of the section I. First embodiment of the invention is applied to a thermal stabilizer used for the method of producing the PC/PET composite resin composition of the third embodiment of the invention.

[III-4C. Inorganic Filler]

The PC/PET composite resin composition produced by the method of the third embodiment of the invention contains an inorganic filler in an amount that is in the range from 1 to 20 parts by weight relative to the resin components of 100 parts by weight, the resin component containing the polycarbonate resin and the deactivated PET. The inorganic filler is contained in a specific amount in this manner, thereby being able to suppress the increase of the viscosity of the resin composition during the thermal preservation. In particular, the inorganic filler is surface-treated and therefore has enhanced adhesiveness to the polycarbonate resin with the result that the inorganic filler is prevented from being defectively dispersed during the thermal preservation and that viscosity is prevented from being increased resulting from agglomeration, thereby suppressing change in injection pressure during injection molding. The inorganic filler accordingly serves to enhance molding stability in this manner.

Examples of the inorganic filler to be used in the third embodiment of the invention include fibrous inorganic fillers such as glass fiber, carbon fiber, metallic fiber, ceramic fiber, milled fiber produced from these fibers, slag fiber, rock wool, wollastonite, xonotlite, potassium titanate whisker, aluminum borate whisker, boron whisker, and basic magnesium sulfate whisker; silicate compounds such as glass flake, glass bead, graphite, talc, mica, kaolinite, sepiolite, attabalgite, montmorillonite, bentonite, and smectite; and inorganic filler such as silica, alumina, and calcium carbonate. These inorganic filler may be, for example, coated with different materials, such as metal-coated glass fiber and metal-coated carbon fiber. These inorganic fillers may be used alone or in combination of two or more.

Among these inorganic fillers, the glass bier, carbon fiber, and milled fiber produced from these fibers are advantageously employed in terms of enhancement of molding stability. In particular, the glass fiber and milled fiber thereof are advantageously employed, thereby providing further strong adhesiveness to the resin component containing the polycarbonate resin and deactivated PET. The glass fiber is especially preferably employed as the inorganic filler used in the third embodiment of the invention.

The composition of the glass fiber is not specifically limited to A glass, C glass, E glass, and the glass fiber may appropriately contain components such as $TiO_2$, $SO_3$, and $P_2O_5$. In this case, E glass (non-alkali glass) is preferably employed.

Although the average fiber diameter of the glass fiber is not specifically limited, the glass fiber to be used has an average fiber diameter that is in the range from 1 to 25 $\mu$m, preferably in the range from 3 to 17 $\mu$m. In the glass fiber having the average fiber diameter which falls within the above ranges, resistance to thermal expansion coefficient is balanced with resistance to peel force in a good manner. In the case where the fiber diameter is reduced, the area of an interface between the glass fiber and the resin component is increased, and an effect of enhancement of molding stability is sufficiently provided. Undesirable influence of such an interface on peel force is, however, increased. In the case where priority is placed on adhesiveness at the interface, use of a glass fiber having a larger diameter can be one of effective steps.

The glass fiber has a preferable fiber length that is in the range from 50 to 1,000 $\mu$m on the basis of a number average fiber length in a pellet of the resin composition or in the molded article, preferably in the range from 100 to 500 $\mu$m, and especially preferably in the range from 120 to 300 $\mu$m. In this case, the number average fiber length of the glass fiber is obtained in the following manner: the molded article is dissolved in a solvent, or the resin is decomposed with basic compounds, thereby obtaining glass fiber residues; and the glass fiber residues are subjected to optical microscope analysis with an image analyzer. Meanwhile, in the calculation of the number average fiber length, a length less than or equal to the fiber diameter is not counted. Even in the case of using other fibrous fillers, a fibrous filler having a number average fiber length of 1,000 $\mu$m or smaller is properly employed.

In order to allow the inorganic filler such as glass fiber to further tightly adhere to the resin component containing the polycarbonate resin and deactivated PET, the inorganic filler is preferably surface-treated by using a silane coupling agent. Examples of a reactive group contained in the silane coupling agent include an epoxy group, amino group, vinyl group, and methacryloxy group. In particular, an epoxy group and amino group are preferably employed.

In general, the glass fiber and carbon fiber are subjected to surface coating, thereby gathering fibers. Because the adhesiveness to the resin component is significantly affected by a surface coating agent, selection of types of the surface coating agent becomes important. In order to secure strong bonding to the resin component with the result that molding stability is enhanced, surface coating agents which contain epoxy-containing compounds are preferably employed. The epoxy-containing compounds exhibit sufficient reactivity with the resin component containing the polycarbonate resin and deactivated PET, exhibit excellent adhesiveness, and exhibit excellent resistance to heat and moisture during adhesion.

Various types of epoxy-containing compounds can be used as a surface treatment agent for the inorganic filler such as glass fiber. A preferred epoxy-containing compound has a high molecular weight structure in which the epoxy-containing compound has a molecular weight of 500 or larger, and a further preferred epoxy-containing compound has a plurality of epoxy groups contained in every molecule thereof. In terms of thermal resistance, an epoxy-containing compound mainly having an aromatic ring structure is preferably employed.

More particularly, preferred examples of the epoxy-containing compound include epoxy resins, especially phenol novolak type epoxy resins and linear cresol novolak type epoxy resins. Among these, phenol novolak type epoxy resins are preferably employed.

In the third embodiment of the invention, in order to enhance the advantageous effect provided by the third embodiment of the invention, the glass fiber which is preferably used as the inorganic filler is preferably subjected to treatment using the above epoxy group-containing silane coupling agent and using the surface-coating agent which contains the epoxy-containing compound, and such a glass fiber accordingly comes to have a surface containing a glycidyl group.

The inorganic filler is contained in the PC/PET composite resin composition produced by the method of the third embodiment of the invention in an amount that is in the range from 1 to 20 parts by weight relative to the resin component of 100 parts by weight, preferably in the range from 2 to 15 parts by weight, and more preferably in the range from 3 to 10 parts by weight, the resin component containing the polycarbonate resin and the deactivated PET.

In the case where the inorganic filler is contained in an amount which falls below the lower limit of the above ranges, an advantageous effect in which addition of the inorganic filler serves to enhance dimension stability cannot be sufficiently provided. In the case where the inorganic filler is contained in an amount which exceeds the upper limit of the above ranges, impact strength may fall into insufficiency.

[III-5. Other Components]

In addition to the polycarbonate resin, deactivated PET, thermal stabilizer, and inorganic filler, the resin composition produced by the method of the third embodiment of the invention may contain various other additives, which are contained in ordinary polycarbonate resin compositions, so as not to impair the advantageous effect provided by the third embodiment of the invention.

The description which has been made in the part [I-5. Other Components] of the section I. First embodiment of the invention is applied to the other additives to be contained.

[III-6. Production Method of PC/PET Composite Resin Composition]

The PC/PET composite resin composition can be produced by any of appropriately selected known methods using the polycarbonate resin, deactivated PET, inorganic filler, phosphorus thermal stabilizer and/or hindered phenol thermal stabilizer, and other additives which are optionally added.

In particular, the polycarbonate resin, deactivated PET, inorganic filler, phosphorus thermal stabilizer and/or hindered phenol thermal stabilizer, and other additives which are optionally added are preliminarily mixed with each other by using various types of mixers such as a tumbling mixer and Henschel mixer. The resultant product was then fused and kneaded with a Banbury mixer, roller, Brabender mixer, single-screw kneading extruder, twin-screw kneading extruder, and kneader, thereby being able to produce the resin composition. Alternatively, the individual components are not preliminarily mixed, or only some of the components are mixed in advance. The resultant product is then fed to an extruder by using a feeder and is subsequently fused and kneaded, thereby being able to also produce the resin composition.

[III-7. Preferred Physical Properties of PC/PET Composite Resin Composition]

In the case where a preferred PC/PET composite resin composition produced by the method of the third embodiment of the invention has been preserved at a temperature of 280°C for 60 minutes, the number average molecular weight $Mn_x$ of a chloroform soluble matter is retained in a proportion of 80% or larger relative to the number average molecular weight $Mn_o$ of a chloroform soluble matter of the resin composition which is not preserved at a temperature of 280°C for 60 minutes. In other words, the number average molecular weight is retained after the thermal preservation in a proportion of 80% or larger, such a proportion being obtained from the formula of $Mn_x/Mn_o \times 100$. In the case where the proportion in which the number average molecular weight is preserved is less than 80%, insufficiency may be generated in the advantageous effect which is provided by the third embodiment of the invention and in which the deterioration caused by the thermal preservation is suppressed, and the deterioration due to the thermal preservation is therefore problematically caused. The number average molecular weight is retained in a proportion of preferably 85% or larger, further preferably 90% or larger.

In a preferred PC/PET composite resin composition produced by the method of the third embodiment of the invention, Charpy impact strength $Ip_x$ which is exhibited after the resin composition is preserved at a temperature of 280°C for 60 minutes is 80% or more of Charpy impact strength $Ip_o$ which is exhibited before the resin composition is preserved at a temperature of 280°C for 60 minutes. In other words, Charpy impact strength is retained after the thermal preservation in a proportion of 80% or larger, such a proportion being obtained from the formula of $Ip_x/Ip_o \times 100$. In the case where the proportion in which the Charpy impact strength is retained is less than 80%, insufficiency may be generated in the advantageous effect which is provided by the third embodiment of the invention and in which the deterioration caused by the thermal preservation is suppressed, and the deterioration due to the thermal preservation is therefore problematically caused. The Charpy impact strength is retained in a proportion of preferably 85% or larger, further preferably 90% or larger.

The PC/PET composite resin composition produced by the method of the third embodiment of the invention preferably exhibits a Charpy impact strength $Ip_o$ of 5.0 kJ/m$^2$ or larger, particularly 7.0 kJ/m$^2$ or larger.

In a preferred PC/PET composite resin composition produced by the method of the third embodiment of the invention, assuming that the MFR of a molded article which is produced as a result of conducting injection-molding after the resin composition is preserved at a temperature of 280°C for 30 minutes is $[R_x]$ and assuming that the MFR of a molded article which is produced as a result of conducting injection-molding immediately after the resin composition is put into an injection machine is $[R_o]$, the decreasing rate of the MFR$[R_x]$ relative to the MFR$[R_o]$ is obtained from the following formula (3) and is in the range from -20 to 20%

$$\text{decreasing rate of MFR}[\%]=([R_o]-[R_x])/[R_o]\times100...(3)$$

In the third embodiment of the invention, the resin composition is preserved for 30 minutes in a cylinder having a cylinder temperature of 280°C, a molded article is then produced by injection molding at the same cylinder temperature (hereinafter referred to as "injection molding", simply), and the MFR of the molded article is defined as $[R_x]$. Furthermore, the resin composition is put into a cylinder having a temperature of 280°C, a molded article is then produced by injection molding immediately after the resin composition is put into the cylinder in an amount adequate to the injection molding, and the MFR of the molded article is defined as $[R_o]$. The decreasing rate of the MFR is obtained from the formula (3) by using these values. In this case, an injection molding machine "Type M150AII-SJ" commercially available from MEIKI CO., LTD. is used.

In the cases where the decreasing rate of the MFR is larger than 20% or is less than -20%, the fluidity of the resin composition is significantly varied with time during the injection molding, and the injection molding is therefore less likely to be conducted under the same conditions. Defective molding such as the occurrence of short shot and mold flash is accordingly caused.

The decreasing rate of the MFR is preferably in the range from -10% to 10% in particular.

In the third embodiment of the invention, the values in the number average molecular weight, Charpy impact strength, and MFR of the PC/PET composite resin composition produced by the method are obtained by procedures which will be described in the section Examples.

In this case, in view of the highest preservation temperature and the longest preservation time in a cylinder during general injection molding of the PC/PET composite resin composition, the preservation conditions are defined as "temperature of 280°C and 60 minutes (1 hour)" in the evaluation of the number average molecular weight and Charpy impact strength of the PC/PET composite resin composition as described above. In addition, such conditions are based on the following assumption: if the resin composition is not problematically deteriorated resulting from being thermally preserved at a temperature of 280°C for 60 minutes, the deterioration due to the thermal preservation is less likely to be caused in general use.

Furthermore, the preservation conditions in the evaluation of the decreasing rate of the MFR are defined as "temperature of 280°C and 30 minutes" for the following reason: the increase of viscosity is caused by agglomeration of the inorganic fillers contained in the resin composition after the passage of approximately 15 to 30 minutes from the start of the preservation in a molding machine; the increase of viscosity is subsequently counteracted by the decrease of viscosity due to the decrease of the molecular weight of the polycarbonate resin; changes in molding properties are therefore likely to be decreased in appearance; and preservation time most adequate to the evaluation is consequently 30 minutes.

[III-8. Production Method of Molded Article of PC/PET Composite Resin]

A method for producing a molded article from the PC/PET composite resin composition of the third embodiment of the invention is not specifically limited. Molding methods which are generally employed for thermoplastic resin can be used, such as a general injection molding method, ultra high-speed injection molding method, injection compression molding method, multicolor injection molding method, gas-assist injection molding method, molding method utilizing a heat-insulating mold, molding method utilizing a rapid heating and cooling mold, foam molding (including supercritical fluid), insert molding, in-mold coating molding (IMC) method, extrusion molding method, sheet molding method, thermal molding method, rotational molding method, lamination molding method, and press molding method. In addition, a molding method utilizing a hot runner technique can be also adopted as one of the various injection molding methods.

The PC/PET composite resin composition produced by the method of the third embodiment of the invention can be used in combination with another thermoplastic resin composition for multicolor molding, thereby being able to produce a composite molded article.

In the third embodiment of the invention, because the deactivated PET as the polyethylene terephthalate resin and a specific thermal stabilizer are used together with a specific amount of inorganic filler, the resin composition which is produced as a result of compounding the polyethylene terephthalate resin with the polycarbonate resin is prevented from being deteriorated resulting from being thermally preserved, and the deterioration caused by the thermal preservation is prevented from problematically occurring during a molding process. In the cases where preservation temperature is excessively increased and where preservation time is excessively prolonged, however, the deterioration due to the thermal preservation may be caused. During a molding process using the PC/PET composite resin composition produced by the method of the third embodiment of the invention, accordingly, the resin composition is preferably preserved at a temperature of 280°C or lower for 60 minutes or shorter.

IV. Fourth Embodiment of the Invention

[IV-1. Polycarbonate Resin]

The description which has been made in the part [I-1. Polycarbonate Resin] of the section I. First embodiment of the invention is applied to a polycarbonate resin used for a method for producing a PC/PET composite resin composition of a fourth embodiment of the invention.

[IV-2. Polyethylene Terephthalate Resin]

The description which has been made in the part [1-2. Polyethylene Terephthalate Resin] of the section I. First embodiment of the invention is applied to a polyethylene terephthalate resin used for the method for producing the PC/PET composite resin composition of the fourth embodiment of the invention.

[IV-3. Resin Component]

The description which has been made in the part [1-3. Resin Component] of the section I. First embodiment of the invention is applied to a resin component used for the method for producing the PC/PET composite resin composition of the fourth embodiment of the invention.

[IV-4A. Thermal Stabilizer]

The description which has been made in the part [I-4A. Thermal Stabilizer] of the section I. First embodiment of the invention is applied to a thermal stabilizer used for the method for producing the PC/PET composite resin composition of the fourth embodiment of the invention.

[IV-4B. Elastomer]

The description which has been made in the part [II-4B. Elastomer] of the section II. Second embodiment of the invention is applied to a thermal stabilizer used for the method for producing the PC/PET composite resin composition of the fourth embodiment of the invention.

[IV-4C. Inorganic Filler]

The description which has been made in the part [III-4C. Inorganic Filler] of the section III. Third embodiment of the invention is applied to a thermal stabilizer used for the method for producing the PC/PET composite resin composition of the fourth embodiment of the invention.

[IV-4D. Combination Use of Elastomer and Inorganic Filler]

In the fourth embodiment of the invention, as in the case of the above, the elastomer is used in an amount that is in the range from 1 to 10 parts by weight relative to the resin component of 100 parts by weight, the resin component containing the polycarbonate resin and the deactivated PET; and the inorganic filler is used in an amount that is in the range from 1 to 20 parts by weight. The elastomer and the inorganic filler are used in combination, thereby providing the advantageous effect of enhancement of molding stability. In order to further effectively provide such an effect, the elastomer and inorganic filler are preferably used in a ratio of elastomer:inorganic filler=1:0.1 to 20 parts by weight, especially in a ratio of 1:0.2 to 10 parts by weight. Furthermore, the total of the elastomer and inorganic filler is contained in an amount that is in the range from 2 to 30 parts by weight relative to the resin component of 100 parts by weight, especially in the range from 5 to 20 parts by weight, the resin component containing the polycarbonate resin and the deactivated PET.

[IV-5. Other Components]

In addition to the polycarbonate resin, deactivated PET, thermal stabilizer, elastomer, and inorganic filler, the resin composition produced by the method of the fourth embodiment of the invention may contain various other additives, which are contained in ordinary polycarbonate resin compositions, so as not to impair the advantageous effect provided by the fourth embodiment of the invention.
The description which has been made in the part [I-5. Other Components] of the section I. First embodiment of the invention is applied to the other additives to be contained.

[IV-6. Production Method of PC/PET Composite Resin Composition]

The PC/PET composite resin composition can be produced by any of appropriately selected known methods using the polycarbonate resin, deactivated PET, elastomer, inorganic filler, phosphorus thermal stabilizer and/or hindered phenol thermal stabilizer, and other additives which are optionally added.

In particular, the polycarbonate resin, deactivated PET, elastomer, inorganic filler, phosphorus thermal stabilizer and/or hindered phenol thermal stabilizer, and other additives which are optionally added are preliminarily mixed with each other by using various types of mixers such as a tumbling mixer and Henschel mixer. The resultant product was then fused and kneaded with a Banbury mixer, roller, Brabender mixer, single-screw kneading extruder, twin-screw kneading extruder, and kneader, thereby being able to produce the resin composition. Alternatively, the individual components are not preliminarily mixed, or only some of the components are mixed in advance. The resultant product is then fed to an extruder by using a feeder and is subsequently fused and kneaded, thereby being able to also produce the resin composition.

[IV-7. Preferred Physical Properties of PC/PET Composite Resin Composition]

In the case where a preferred PC/PET composite resin composition produced by the method of the fourth embodiment of the invention has been preserved at a temperature of 280°C for 60 minutes, the number average molecular weight $Mn_x$ of a chloroform soluble matter is retained in a proportion of 80% or larger relative to the number average molecular weight $Mn_o$ of a chloroform soluble matter of the resin composition which is not preserved at a temperature of 280°C for 60 minutes. In other words, the number average molecular weight is retained after the thermal preservation in a proportion of 80% or larger, such a proportion being obtained from the formula of $Mn_x/Mn_o \times 100$. In the case where the proportion in which the number average molecular weight is retained is less than 80%, insufficiency may be generated in the advantageous effect which is provided by the fourth embodiment of the invention and in which the deterioration caused by the thermal preservation is suppressed, and the deterioration due to the thermal preservation is therefore problematically caused. The number average molecular weight is retained in a proportion of preferably 85% or larger, further preferably 90% or larger.

In a preferred PC/PET composite resin composition produced by the method of the fourth embodiment of the invention, Charpy impact strength $Ip_x$ which is exhibited after the resin composition is preserved at a temperature of 280°C for 60 minutes is 80% or more of Charpy impact strength $Ip_o$ which is exhibited before the resin composition is preserved at a temperature of 280°C for 60 minutes. In other words, Charpy impact strength is retained after the thermal preservation in a proportion of 80% or larger, such a proportion being obtained from the formula of $Ip_x/Ip_o \times 100$. In the case where the proportion in which the Charpy impact strength is retained is less than 80%, insufficiency may be generated in the advantageous effect which is provided by the fourth embodiment of the invention and in which the deterioration caused by the thermal preservation is suppressed, and the deterioration due to the thermal preservation is therefore problematically caused. The Charpy impact strength is retained in a proportion of preferably 85% or larger, further preferably 90% or larger.

The PC/PET composite resin composition produced by the method of the fourth embodiment of the invention preferably exhibits a Charpy impact strength $Ip_o$ of 10.0 kJ/m$^2$ or larger, particularly 12.0 kJ/m$^2$ or larger.

In a preferred PC/PET composite resin composition produced by the method of the fourth embodiment of the invention, assuming that the MFR of a molded article which is produced as a result of conducting injection-molding after the resin composition is preserved at a temperature of 280°C for 30 minutes is $[R_x]$ and assuming that the MFR of a molded article which is produced as a result of conducting injection-molding immediately after the resin composition is put into an injection machine is $[R_o]$, the decreasing rate of the MFR$[R_x]$ relative to the MFR$[R_o]$ is obtained from the following formula (3) and is in the range from -20 to 20%.

decreasing rate of

$$\text{decreasing rate of MFR[\%]} = ([R_o] - [R_x]) / [R_o] \times 100 \ldots (3)$$

In the fourth embodiment of the invention, the resin composition is preserved for 30 minutes in a cylinder having a cylinder temperature of 280°C, a molded article is then produced by injection molding at the same cylinder temperature (hereinafter referred to as "injection molding", simply), and the MFR of the molded article is defined as $[R_x]$. Furthermore, the resin composition is put into a cylinder having a temperature of 280°C, a molded article is then produced by injection molding immediately after the resin composition is put into the cylinder in an amount adequate to the injection molding, and the MFR of the molded article is defined as $[R_0]$. The decreasing rate of the MFR is obtained from the formula (3) by using these values. In this case, an injection molding machine "Type M150AII-SJ" commercially available from MEIKI CO., LTD. is used.

In the cases where the decreasing rate of the MFR is larger than 20% or is less than -20%, the fluidity of the resin composition is significantly varied with time during the injection molding, and the injection molding is therefore less likely to be conducted under the same conditions. Defective molding such as the occurrence of short shot and mold flash is accordingly caused. The decreasing rate of the MFR is preferably in the range from - 10% to 10% in particular.

In the fourth embodiment of the invention, the values in the number average molecular weight, Charpy impact strength, and MFR of the PC/PET composite resin composition are obtained by procedures which will be described in the section Examples.

In this case, in view of the highest preservation temperature and the longest preservation time in a cylinder during general injection molding using the PC/PET composite resin composition, the preservation conditions are defined as "temperature of 280°C and 60 minutes (1 hour)" in the evaluation of the number average molecular weight and Charpy impact strength of the PC/PET composite resin composition as described above. In addition, such conditions are based on the following assumption: if the resin composition is not problematically deteriorated resulting from being thermally preserved at a temperature of 280°C for 60 minutes, the deterioration due to the thermal preservation is less likely to be caused in general use.

Furthermore, the preservation conditions in the evaluation of the decreasing rate of the MFR are defined as "temperature of 280°C and 30 minutes" for the following reason: the increase of viscosity is caused by agglomeration of the elastomers and inorganic fillers contained in the resin composition after the passage of approximately 15 to 30 minutes from the start of the preservation in a molding machine; the increase of viscosity is subsequently counteracted by the decrease of viscosity due to the decrease of the molecular weight of the polycarbonate resin; changes in molding properties are therefore likely to be decreased in appearance; and preservation time most adequate to the evaluation is consequently 30 minutes.

[IV-8. Production Method of Molded Article of PC/PET Composite Resin]

A method for producing a molded article from the PC/PET composite resin composition produced by the method of the fourth embodiment of the invention is not specifically limited. Molding methods which are generally employed for thermoplastic resin can be used, such as a general injection molding method, ultra high-speed injection molding method, injection compression molding method, multicolor injection molding method, gas-assist injection molding method, molding method utilizing a heat-insulating mold, molding method utilizing a rapid heating and cooling mold, foam molding (including supercritical fluid), insert molding, in-mold coating molding (IMC) method, extrusion molding method, sheet molding method, thermal molding method, rotational molding method, lamination molding method, and press molding method. In addition, a molding method utilizing a hot runner technique can be also adopted as one of the various injection molding methods.

The PC/PET composite resin composition of the fourth embodiment of the invention can be used in combination with another thermoplastic resin composition for multicolor molding, thereby being able to produce a composite molded article.

In the fourth embodiment of the invention, because the deactivated PET as the polyethylene terephthalate resin and a specific thermal stabilizer are used together with specific amounts of elastomer and inorganic filler, the resin composition which is produced as a result of compounding the polyethylene terephthalate resin with the polycarbonate resin is prevented from being deteriorated resulting from being thermally preserved, and the deterioration caused by the thermal preservation is prevented from problematically occurring during a molding process. In the cases where preservation temperature is excessively increased and where preservation time is excessively prolonged, however, the deterioration due to the thermal preservation may be caused. During a molding process using the PC/PET composite resin composition produced by the method of the fourth embodiment of the invention, accordingly, the resin composition is preferably preserved at a temperature of 280°C or lower for 60 minutes or shorter.

EXAMPLES

The embodiments of the invention will be hereinafter described in more detail with reference to examples and comparison examples.

[Components Contained in Resin Composition Used in Examples and Comparison Examples]

Polycarbonate resin 1: aromatic polycarbonate resin "product name: Iupilon (registered trademark) S-3000" commercially available from Mitsubishi Engineering-Plastics Corporation, viscosity average molecular weight 21,500,

and terminal hydroxyl group content 150 ppm.

Polycarbonate resin 2: the mixture of aromatic polycarbonate resin "product name: lupilon (registered trademark) S-3000" commercially available from Mitsubishi Engineering-Plastics Corporation (viscosity average molecular weight 21,500 and terminal hydroxyl group content 150 ppm) and aromatic polycarbonate resin "product name: lupilon (registered trademark) H-4000" commercially available from Mitsubishi Engineering-Plastics Corporation (viscosity average molecular weight 16,000 and terminal hydroxyl group content 100 ppm), S-3000/H-4000=81/19 (weight ratio), and viscosity average molecular weight 20,500.

Polycarbonate resin 3: the mixture of aromatic polycarbonate resin "product name: lupilon (registered trademark) S-3000" commercially available from Mitsubishi Engineering-Plastics Corporation (viscosity average molecular weight 21,500 and terminal hydroxyl group content 150 ppm) and aromatic polycarbonate resin "product name: lupilon (registered trademark) H-4000" commercially available from Mitsubishi Engineering-Plastics Corporation (viscosity average molecular weight 16,000 and terminal hydroxyl group content 100 ppm), S-3000/H-4000=55/45 (weight ratio), and viscosity average molecular weight 18,500.

Polyethylene resin: "product name: KERNEL KS240T" (polyethylene resin) commercially available from Japan Polyethylene Corporation.

Untreated PET 1: PET "GG500S" which is a product commercially available from Mitsubishi Chemical Corporation and in which a germanium dioxide catalyst is used as a polycondensation catalyst, intrinsic viscosity [η]: 0.76 dl/g, terminal carboxyl group concentration AV: 28 μeq/g, ET ratio: 97.8 equivalent%, solid state polymerization rate Ks: 0.0085 dl/g·hr in the solid state polymerization rate Ks of untreated PET 1 used in an example and comparison example according to the first embodiment of the invention and 0.0086 dl/g·hr in the solid state polymerization rate Ks of untreated PET 1 used in examples and comparison examples according to the second to fourth embodiments of the invention (physical properties were obtained by a measuring method which will be hereinafter described.)

Untreated PET 2: PET "NOVAPEX (registered trademark) RF543DE" which is a product commercially available from Mitsubishi Chemical Corporation and in which a titanium catalyst is used as a polycondensation catalyst, intrinsic viscosity [η]: 0.74 dl/g, terminal carboxyl group concentration AV: 8.4 μeq/g, ET ratio: 97.6 equivalent%, solid state polymerization rate Ks: 0.0078 dl/g·hr (physical properties were obtained by a measuring method which will be hereinafter described.)

Deactivated PET 1: the untreated PET 1 which was subjected to hereinafter described deactivation treatment of a polycondensation catalyst, intrinsic viscosity [η]: 0.75 dl/g, terminal carboxyl group concentration AV: 30 μeq/g, ET ratio: 97.8 equivalent%, solid state polymerization rate Ks: 0.0031 dl/g·hr in the solid state polymerization rate Ks of deactivated PET 1 used in an example and comparison example according to the first embodiment of the invention and 0.0032 dl/g·hr in the solid state polymerization rate Ks of deactivated PET 1 used in examples and comparison examples according to the second to fourth embodiments of the invention (physical properties were obtained by measuring procedures which will be hereinafter described).

<Deactivation Treatment Method>

The untreated PET 1 of 50 kg was boiled in distilled water of 50 kg at a temperature of 100°C for 1 hour and was then dehydrated. The resultant product was then dried at a temperature of 120°C for 6 hour under nitrogen atmosphere.

Deactivated PET 2: the untreated PET 2 which was subjected to hereinafter described deactivation treatment of a polycondensation catalyst, intrinsic viscosity [η]: 0.73 dl/g, terminal carboxyl group concentration AV: 12 μeq/g, ET ratio: 97.6 equivalent%, solid state polymerization rate Ks: 0.0042 dl/g·hr (physical properties were obtained by measuring procedures which will be hereinafter described).

<Deactivation Treatment Method>

A phosphorus thermal stabilizer 2 (ADK STAB AX-71) of 0.01 parts by weight and a phosphorus thermal stabilizer 1 (IRGAFOS 168) of 0.03 parts by weight were added to the untreated PET 2 of 100 parts by weight, the phosphorus thermal stabilizers 1 and 2 being hereinafter described. The resultant product was uniformly mixed by a tumbling mixer, and a twin-screw extruder (commercially available from Japan Steel Works, LTD., TEX30XCT, L/D=42, and barrels number 12) was then used to feed the resultant product from the barrels to an extruder under conditions including a cylinder temperature of 270°C, screw-rotating speed 200 rpm, and an ejection amount 15 kg/hr. The resultant product was then fused and kneaded, thereby producing the pellets of the deactivated PET 2.

Deactivated PBT: a PBT resin "NOVADURAN (registered trademark) 5020" commercially available from Mitsubishi Engineering-Plastics Corporation, the PBT resin being subjected to the following deactivation treatment of a polycondensation catalyst.

<Deactivation Treatment Method>

The phosphorus thermal stabilizer 2 (ADK STAB AX-71) of 0.1 parts by weight and the phosphorus thermal stabilizer 1 (IRGAFOS 168) of 0.03 parts by weight were added to the PBT resin of 100 parts by weight, the phosphorus thermal stabilizers 1 and 2 being hereinafter described. The resultant product was uniformly mixed by a tumbling mixer, and the twin-screw extruder (commercially available from Japan Steel Works, LTD., TEX30XCT, L/D=42, and barrels number 12) was then used to feed the resultant product from the barrels to an extruder under conditions including a cylinder temperature of 240°C, screw-rotating speed 200 rpm, and an ejection amount 15 kg/hr. The resultant product was then fused and kneaded, thereby producing the pellets of the deactivated PET 2.

Phosphorus thermal stabilizer 1: "IRGAFOS 168" [tris(2,4-di-t-butylphenyl)phosphite] commercially available from Ciba Specialty Chemicals Inc.
Phosphorus thermal stabilizer 2: "ADK STAB AX-71 (product name)" (mono or di-stearyl acid phosphate) commercially available from ADEKA corporation.

Hindered phenol thermal stabilizer: "IRGANOX 1076" [octadecyl-3-(3,5-di-tert-butyl-4-hydroxyphenyl)propionate] commercially available from Ciba Specialty Chemicals Inc.

Elastomer A: "product name: Staphyloid MG1011" commercially available from GANZ CHEMICAL CO., LTD. [core/shell elastomer having a structure of butyl acrylate (core)/acrylonitrile-styrene copolymer (shell)].
Elastomer B: "product name: PARALOID EXL-2315" commercially available from Rohm and Haas Company [core/shell elastomer having a structure of butyl acrylate (core)/polymethyl methacrylate (shell)].
Elastomer C: "product name: METABLEN S-2100" commercially available from MITSUBISHI RAYON CO., LTD. [core/shell elastomer having a structure of silicone acryl (core)/polymethyl methacrylate (shell)].
Elastomer D: "product name: Tuftec H1041Z" commercially available from ASAHI KASEI CORPORATION (modified SEBS).
Inorganic filler T: talc "product name MICRO ACE P3" commercially available from NIPPON TALC Co., Ltd., average particle diameter of 5 $\mu$m.
Inorganic filler A: glass fiber "product name ECS03T-571" commercially available from Nippon Electric Glass Co., Ltd. (average fiber diameter of 13 $\mu$m and average fiber length of 3 mm).
Inorganic filler B: glass fiber "product name ECS03T-187" commercially available from Nippon Electric Glass Co., Ltd. [average fiber diameter of 13 $\mu$m, average fiber length of 3 mm, and glass fiber which was subjected to surface treatment (gathered by a bisphenol-based epoxy resin) so as to have a surface containing a glycidyl group].
Inorganic filler C: glass fiber "product name ECS03T-531DE" commercially available from Nippon Electric Glass Co., Ltd. [average fiber diameter of 6 $\mu$m, average fiber length of 3 mm, and glass fiber which was subjected to surface treatment (gathered by a bisphenol-based epoxy resin) so as to have a surface containing a glycidyl group].
Inorganic filler D: glass fiber "product name ECS03T-127" commercially available from Nippon Electric Glass Co., Ltd. {average fiber diameter of 13 $\mu$m, average fiber length of 3 mm, and glass fiber which was subjected to surface treatment (gathered by a bisphenol-based epoxy resin) so as to have a surface containing a glycidyl group [containing the glycidyl group in the number larger than that in the inorganic filler B (T-187)]}.
Inorganic filler E: glass fiber "product name ECS03T-511" commercially available from Nippon Electric Glass Co., Ltd. [average fiber diameter of 13 $\mu$m, average fiber length of 3 mm, and glass fiber which was subjected to surface treatment (gathered by a bisphenol-based epoxy resin) so as to have a surface containing a -COONa group].
Inorganic filler F: wollastonite "NYGLOS 4W" commercially available from NYCOMINERALS Corporation (average fiber diameter of 4.5 $\mu$m, average fiber length of 50 $\mu$m, and not subjected to surface treatment).
Carbon black: furnace carbon black "#1000" commercially available from Mitsubishi Chemical Corporation.

[Method for Evaluating Physical Properties or Characteristics of PET]

<Concentration of Terminal Carboxyl Group of PET>

Resin chip of 0.5 g was precisely weighed and was then dissolved in benzyl alcohol of 25 ml at a temperature of 195°C. The resultant product was cooled in ice water for several tens of seconds, and the ethyl alcohol of 2 ml was then added to the resultant product. An automatic titrator ("AUT-301" commercially available from TOA Electronics Ltd.) was used for neutralization titration of the resultant product with the aid of 0.01 N-NaOH benzyl alcohol solution. On the basis of measured titration amount A (ml), blank titration amount B (ml), titre F of NaOH benzyl alcohol, and weight value W (g) of specimen, the amount AV ($\mu$eq/g) of the terminal carboxyl group was obtained from the following formula.

$$AV=(A-B)\times0.01\times F\times1000/W$$

<Intrinsic viscosity of PET>

A solution of frozen and crushed PET specimen of 0.50 g in a solvent of the mixed solution of phenol/tetrachloroethane (weight ratio 1/1) was prepared so as to have a concentration (c) of 1.0 g/dl. In this case, the specimen was dissolved at a temperature of 120°C for 30 minutes. The relative viscosity ($\eta_{rel}$) of the produced solution only to the solvent (c=0) was measured at a temperature of 30°C with an Ubbelohde viscometer. A specific viscosity ($\eta_{sp}$) was obtained by withdrawing 1 from the measured relative viscosity ($\eta_{rel}$), and the ratio ($\eta_{sp}/c$) of the specific viscosity ($\eta_{sp}$) to the concentration (c) was obtained. In the cases of concentrations (c) of 0.5 g/dl, 0.2 g/dl, and 0.1 g/dl, ratios ($\eta_{sp}/c$) in the individual cases were similarly obtained. On the basis of the obtained values, the ratio ($\eta_{sp}/c$) based on the assumption that the concentration (c) was extrapolated into 0 was defined as an intrinsic viscosity [$\eta$] (dl/g).

<Analysis of Composition of PET>

A solution which had been produced as a result of dissolving a resin specimen in deuterated trifluoroacetic acid at normal temperature was used in an amount of 3 weight% to measure $^1$H-NMR with a nuclear magnetic resonator ("type JNM-EX270" commercially available from JEOL Ltd.), and each peak was assigned. On the basis of the integration ratio of the assigned peaks, the proportions of terephthalic acid, dicarboxylic acid components other than the terephthalic acid, ethylene glycol, and diol components other than the ethylene glycol were obtained, thereby calculating the content ratio of an oxyethylene oxyterephthaloyl unit (ET ratio).

<Solid State Polymerization Rate of PET>

PET chips of 10 g were put into a container having a diameter of 30 mm $\phi$ and height of 30 mm and produced from a stainless mesh, the PET chips having been cut so as to each have an average particle weight of 24 mg. The PET chips in the container were dried in an inert oven ("type IPHH-201" commercially available from ESPEC Corp.) under nitrogen flow of 40 litter/minute at a temperature of 160°C for 4 hours. The temperature was then increased from 160°C to 210°C in an hour while the nitrogen flow was held. On the basis of the intrinsic viscosities [$\eta$]s and [$\eta$]m of the PET chips which had been respectively held at a temperature of 210°C for three and two hours, a solid state polymerization rate was calculated from the following formula (1).

$$\text{Solid state polymerization rate Ks=([}\eta\text{]s-[}\eta\text{]m)/1...(1)}$$

[Molding Method Using Resin Composition and Evaluation Method of Resin Composition]

<Molding Method>

The pellet produced in each of the examples was dried at a temperature of 120°C for 6 or more hours, and an injection molding machine ("Type M150AII-SJ" commercially available from MEIKI CO., LTD.) was used under conditions including a cylinder temperature of 280°C, molding temperature of 80°C, and molding cycle of 55 seconds. The specimens were individually produced under the following conditions: normal molding in which the resin was not preserved in the cylinder, in other words, fused resin composition was put into the cylinder, and injection molding was then conducted immediately after the resin composition was put into the cylinder in an amount sufficient to conduct injection molding (no preservation time); molding conducted after the resin composition was preserved in the cylinder for 60 minutes; and molding conducted after the resin composition was preserved in the cylinder for 30 minutes (individually producing a specimen produced without preservation of the resin composition, a specimen produced after the resin composition was preserved for 60 minutes, and a specimen produced after the resin composition was preserved for 30 minutes). The specimens were produced so as to each have a shape compliant with the multi-purpose specimen type A of ISO 3167 standard.

<Retention of Number Average Molecular Weight of Resin Composition>

The number average molecular weight $Mn_o$ of a specimen free from preservation and the number average molecular weight $Mn_x$ of the specimen preserved for 60 minutes were individually measured, each specimen having been produced by the above molding method. On the basis of the obtained values, the retention ($Mn_x/Mn_o \times 100$) of the number average molecular weight was calculated.

The number average molecular weight was measured by the following processes.

(Number Average Molecular Weight of Resin Composition)

Part equivalent to a weight of approximately 50 mg was removed from the molded piece of the resin composition and was then immersed into chloroform so as to account for 0.1 weight% of the total. The resultant product was allowed to stand at room temperature for 24 hours. The solution was then filtrated by a polytetrafluoroethylene membrane filter with a pore size of 0.45 $\mu$m, thereby producing a chloroform soluble matter used for gel chromatography measurement. The resultant chloroform soluble matter of the resin composition was put into Tosoh HLC-8220GPC(R) in an amount of 0.1 ml, and GPC measurement was conducted at a flow rate of 1.0 ml/minute by using chloroform as a mobile phase. A PL 10 $\mu$m Mixed B (7.5 mm, I.D$\times$30 cm$\times$2) was used as a column, a column temperature was set to a level of 40°C, and an internal RI was used as a detector. Monodisperse polystyrene was used as a calibration specimen, and number average molecular weight was measured on the basis of polystyrene standard. Each specimen was measured twice, and the average value of the twice measurement was defined as a number average molecular weight Mn.

<Charpy Impact Strength of Resin Composition>

In the specimen produced through the above molding process without preservation, Charpy notched impact strength $Ip_o$ was measured in accordance with ISO 179 standard.

<Retention of Charpy Impact Strength of Resin Composition>

In the specimen produced through the above molding process with the preservation for 60 minutes, Charpy impact strength $Ip_x$ was measured. The retention ($Ip_x/Ip_o \times 100$) of Charpy impact strength was calculated from the Charpy impact strength $Ip_x$ and the Charpy impact strength $Ip_o$ of the specimen produced without preservation.

<Decreasing Rate of MFR of Resin Composition>

The specimens respectively produced through the above molding processes without preservation and with preservation for 30 minutes were cut with pruning scissors, and the melt flow rate (MFR) of the resultant products were then individually measured. The measurement was conducted under conditions including a cylinder temperature of 280°C and a load of 2.16 kg in accordance with ASTM D1238 standard.

Assuming that the MFR of the specimen produced with the preservation for 30 minutes was $[R_x]$ and that the MFR of the specimen produced without preservation was $[R_o]$, these values were used to calculate the decreasing rate of MFR from the following formula.

$$\mathtt{decreasing\ rate\ of\ MFR=([R_o]-[R_x]/[R_o]\times100)}$$

<Elastic Modulus of Resin Composition>

In the specimen produced without preservation, the elastic modulus of the resin composition was measured in accordance with ISO 527 standard.

<Appearance of Molded Article>

In the ISO specimen produced through the above molded process with the preservation for 60 minutes in cylinder, the appearance of the molded article was visually observed and was then evaluated on the basis of the following criteria.

A: silver streaks, trace of foam formation, and the like were not observed, and glossy appearance was exhibited;

B: although glossy appearance was exhibited, a slightly uneven surface profile was observed in the vicinity of a gate or the like; and

C: silver streaks were generated on the most area of a surface, and non-glossy appearance was exhibited.

I. Examples and Comparison Examples of First Embodiment of Invention

[Examples I-1 to 17, Comparison Examples I-1 to 10]

The individual components listed in Tables 1 and 2 were uniformly blended in proportions listed in Tables 1 and 2 by using a tumbling mixer, and a twin-screw extruder (commercially available from Japan Steel Works, LTD., TEX30XCT, L/D=42, and barrel numbers 12) was then used to feed the resultant products from the barrels to an extruder under conditions including a cylinder temperature of 280°C, screw-rotating speed 200 rpm, and an ejection amount 30 kg/hr. The resultant products were then fused and kneaded, thereby producing the pellets of the resin compositions.

The resultant pellets of the resin compositions were used to produce specimens through the above molding process. The produced specimens were evaluated, and the evaluation results are listed in Tables 1 and 2.

[Table 1]

| | | Examples | | | | | | |
|---|---|---|---|---|---|---|---|---|
| | | I-1 | I-2 | I-3 | I-4 | I-5 | I-6 | I-7 |
| Components of resin composition (parts by weight) | Polycarbonate resin 1 | 80 | 80 | 80 | | | 70 | 90 |
| | Polycarbonate resin 3 | | | | 80 | 80 | | |
| | Deactivated PET 1 | 20 | 20 | 20 | 20 | | 30 | 10 |
| | Deactivated PET 2 | | | | | 20 | | |
| | Untreated PET 1 | | | | | | | |
| | Untreated PET 2 | | | | | | | |
| | Deactivated PST | | | | | | | |
| | Phosphorus thermal stabilizer 1 | 0.03 | | 0.03 | 0.03 | 0.03 | 0.03 | 0.03 |
| | Phosphorus thermal stabilizer 2 | | | | | | | |
| | Hindered phenol thermal stabilizer | | 0.1 | 0.1 | 0.1 | 0.1 | 0.1 | 0.1 |
| | Carbon black | 0.05 | 0.05 | 0.05 | 0.05 | 0.05 | 0.05 | 0.05 |
| Evaluation results | Retention of number average molecular weight (%) | 81 | 86 | 91 | 90 | 84 | 86 | 90 |
| | Charpy impact strength $Ip_o$ (kJ/m$^2$) | 10.0 | 10.2 | 10.8 | 9.5 | 8.2 | 10.0 | 10.5 |
| | Retention of Charpy impact strength (%) | 86 | 87 | 91 | 95 | 80 | 85 | 90 |
| | Decreasing rate of MFR (%) | -8 | -10 | -5 | -9 | -12 | -12 | -6 |
| | Elastic modulus (MPa) | 2280 | 2270 | 2300 | 2310 | 2270 | 2370 | 2290 |
| | Appearance of molded article | A | A | A | A | A | A | A |

[Table 2]

| | | | Comparative Examples | | | | | | | | | |
|---|---|---|---|---|---|---|---|---|---|---|---|---|
| | | | I-1 | I-2 | I-3 | I-4 | I-5 | I-6 | I-7 | I-8 | I-9 | I-10 |
| Components of resin composition (parts by weight) | Polycarbonate resin 1 | | 80 | 80 | 80 | 80 | | | 70 | 90 | 90 | 10 |
| | Polycarbonate resin 3 | | | | | | | 80 | | | | 70 |
| | Deactivated PET 1 | | | 20 | | | | | 30 | 10 | | |
| | Deactivated PET 2 | | | | | | | | | | | |
| | Untreated PET 1 | | 20 | | 20 | 20 | | | | | | |
| | Untreated PET 2 | | | | | | 20 | | | | 10 | 30 |
| | Deactivated PBT | | | | | | | 20 | | | | |
| | Phosphorus thermal stabilizer 1 | | | | 0.03 | 0.03 | 0.03 | 0.03 | | | 0.03 | 0.03 |
| | Phosphorus thermal stabilizer 2 | | | | | | 0.0004 | | | | 0.0002 | 0.0006 |
| | Hindered phenol thermal stabilizer | | | | | 0.1 | 0.1 | | | | 0.1 | 0.1 |
| | Carbon black | | 0.05 | 0.05 | 0.05 | 0.05. | 0.05 | 0.05 | 0.05 | 0.05 | 0.05 | 0.05 |
| Evaluation results | Retention of number average molecular weight (%) | | 68 | 74 | 72 | 74 | 68 | 68 | 73 | 80 | 70 | 68 |
| | Charpy impact strength $Ip_o$(kJ/m$^2$) | | 9.5 | 9.8 | 10.1 | 10.1 | 9.4 | 5.0 | 9.7 | 9.5 | 9.0 | 8.8 |
| | Retention of Charpy impact strength (%) | | 57 | 76 | 72 | 73 | 63 | 60 | 74 | 76 | 65 | 61 |
| | Decreasing rate of MFR (%) | | -40 | -19 | -32 | -24 | -33 | -45 | -17 | -21 | -33 | -30 |
| | Elastic modulus (MPa) | | 2300 | 2260 | 2280 | 2250 | 2260 | 2520 | 2400 | 2300 | 2250 | 2360 |
| | Appearance of molded article | | C | B | C | C | C | C | B | B | C | C |

The following results were found from Tables 1 and 2.

The examples I-1 to I-7 of embodiments of the invention provided the following findings: viscosity was less likely to be changed resulting from preservation during injection molding; thermal stability, molding stability, and mechanical properties, such as Charpy impact strength and elastic modulus, were provided in a well balanced manner; and the molded articles had excellent surface appearance.

The examples I-3 to I-5 provided the finding in which various types of polycarbonate resins and deactivated PETs could be used.

The examples I-3, I-6, and I-7 provided the finding in which the content ratio of the polycarbonate resin to the deactivated PET was effective within the scope of embodiments of the invention.

In the comparison example I-1, the untreated PET was used, and the thermal stabilizer was not contained. Poor results were therefore provided in the evaluation of retention of number average molecular weight, retention of Charpy impact strength, decreasing rate of MFR, and surface appearance of the molded article.

In each of the comparison examples, I-2, I-7, and I-8, although the deactivated PET was used, the thermal stabilizer was not contained. Poor results were therefore provided in the evaluation of retention of number average molecular weight and retention of Charpy impact strength.

In each of the comparison examples I-3 and I-4, although the thermal stabilizer was contained, the untreated PET was used. Poor results were therefore provided in the evaluation of retention of number average molecular weight, retention of Charpy impact strength, decreasing rate of MFR, and surface appearance of the molded article.

In each of the comparison examples I-5, 1-9, and I-10, the phosphorus thermal stabilizer 2 was subsequently added to deactivate the PET. Poor results were therefore provided in each evaluation of retention of number average molecular weight, retention of Charpy impact strength, decreasing rate of MFR, and the surface appearance of the molded article.

In the comparison example I-6, the deactivated PBT was used in place of the deactivated PET. Poor results were therefore provided in the evaluation of retention of number average molecular weight, retention of Charpy impact strength, decreasing rate of MFR, and surface appearance of the molded article.

II. Examples and Comparison Examples of Second Embodiment of Invention

[Examples II-1 to 5, Comparison Examples II-1 to 3]

The individual components listed in Table 3 were uniformly blended in proportions listed in Table 3 by using a tumbling mixer, and a twin-screw extruder (commercially available from Japan Steel Works, LTD., TEX30XCT, L/D=42, and barrel numbers 12) was then used to feed the resultant products from the barrels to an extruder under conditions including a cylinder temperature of 280°C, screw-rotating speed 200 rpm, and an ejection amount 30 kg/hr. The resultant products were then fused and kneaded, thereby producing the pellets of the resin compositions.

The resultant pellets of the resin compositions were used to produce specimens through the above molding process. The produced specimens were evaluated, and the evaluation results are listed in Table 3.

[Table 3]

| | | Examples | | | | | Comparative Examples | | |
|---|---|---|---|---|---|---|---|---|---|
| | | II-1 | II-2 | II-3 | II-4 | II-5 | II-1 | II-2 | II-3 |
| Components of resin composition (parts by weight) | Polycarbonate resin 1 | 80 | 80 | 80 | 70 | 90 | 80 | 80 | 80 |
| | Deactivated PET 1 | 20 | 20 | 20 | 30 | 10 | | | 20 |
| | Untreated PET 1 | | | | | | 20 | 20 | |
| | Phosphorus thermal stabilizer 1 | 0.03 | 0.03 | 0.03 | 0.03 | 0.03 | 0.03 | | |
| | Hindered phenol thermal stabilizer | 0.1 | 0.1 | 0.1 | 0.1 | 0.1 | | | |
| | Elastomer A | 3 | | | | | | 3 | 3 |
| | Elastomer B | | 3 | | 3 | 3 | | | |
| | Elastomer C | | | 3 | | | | | |
| | Carbon black | 0.05 | 0.0.5 | 0.05 | 0.05 | 0.05 | 0.05 | 0.05 | 0.05 |

(continued)

| Evaluation results | | Examples | | | | | Comparative Examples | | |
|---|---|---|---|---|---|---|---|---|---|
| | | II-1 | II-2 | II-3 | II-4 | II-5 | II-1 | II-2 | II-3 |
| Evaluation results | Retention of number average molecular weight (%) | 91 | 92 | 91 | 88 | 90 | 68 | 70 | 74 |
| | Charpy impact strength $Ip_o$ (kJ/m$^2$) | 26 | 29 | 23 | 20.6 | 26.4 | 10 | 24 | 24 |
| | Retention of Charpy impact strength (%) | 78 | 82 | 86 | 80 | 81 | 57 | 62 | 72 |
| | Decreasing rate of MFR (%) | 23 | 5 | 9 | -10 | -5 | -22 | -5 | 21 |
| | Elastic modulus (MPa) | 2240 | 2200 | 2230 | 2240 | 2220 | 2310 | 2230 | 2240 |
| | Appearance of molded article | A | A | A | A | A | C | C | B |

The following results were found from Table 3.

The examples II-1 to II-5 of embodiments of the invention provided the following findings: viscosity was less likely to be changed resulting from the preservation during injection molding; thermal stability, molding stability, and mechanical properties, such as Charpy impact strength and elastic modulus, were provided in a well balanced manner; and the molded articles had excellent surface appearance.

The examples II-1 to II-3 provided the finding in which various types of elastomers could be used.

The examples II-2, II-4, and II-5 provided the finding in which the content ratio of the polycarbonate resin to the deactivated PET was effective within the scope of embodiments of the invention.

In the comparison example II-1, the untreated PET was used, and the thermal stabilizer and elastomer were not contained. Poor results were therefore provided in each evaluation of retention of number average molecular weight, retention of Charpy impact strength, decreasing rate of MFR, and surface appearance of the molded article.

In the comparison example II-2, although the elastomer was contained, the thermal stabilizer was not contained, and the untreated PET was used. Poor results were therefore provided in the evaluation of retention of number average molecular weight, retention of Charpy impact strength, and surface appearance of the molded article.

In the comparison example II-4, although the deactivated PET was used, the elastomer was contained, but the thermal stabilizer was not contained. Poor results were therefore provided in the evaluation of retention of number average molecular weight, retention of Charpy impact strength, and decreasing rate of MFR.

III. Examples and Comparison Examples of Third Embodiment of Invention

[Examples III-1 to 4, Comparison Examples III-1 to 3]

The individual components listed in Table 4 were uniformly blended in proportions listed in Table 4 by using a tumbling mixer, and a twin-screw extruder (commercially available from Japan Steel Works, LTD., TEX30XCT, L/D=42, and barrel numbers 12) was then used to feed the resultant products from the barrels to an extruder under conditions including a cylinder temperature of 280°C, screw-rotating speed 200 rpm, and an ejection amount 30 kg/hr. The resultant products were then fused and kneaded, thereby producing the pellets of the resin compositions.

The resultant pellets of the resin compositions were used to produce specimens through the above molding process. The produced specimens were evaluated, and the evaluation results are listed in Table 4.

[Table 4]

| | | Examples | | | | Comparative Examples | | |
|---|---|---|---|---|---|---|---|---|
| | | II-1 | III-2 | III-3 | III-4 | III-1 | III-2 | III-3 |
| Components of resin composition (parts by weight) | Polycarbonate resin 1 | 80 | 80 | 80 | 95 | 80 | 80 | 80 |
| | Polyethylene resin | | | | 3 | | | |
| | Deactivated PET 1 | 20 | 20 | 20 | 5 | | | 20 |
| | Untreated PET 1 | | | | | 20 | 20 | |
| | Phosphorus thermal stabilizer 1 | 0.03 | 0.03 | 0.03 | 0.03 | | | |
| | Hindered phenol thermal stabilizer | 0.1 | 0.1 | 0.1 | 0.1 | | | |
| | In organic filler T | 5 | | | | | | |
| | Inorganic filler A | | 5 | | 5 | | 5 | 5 |
| | Inorganic filler B | | | 5 | | | | |
| | Carbon black | 0.05 | 0.05 | 0.05 | 0.05 | 0.05 | 0.05 | 0. 05 |
| Evaluation results | Retention of number average molecular weight (%) | 85 | 90 | 91 | 95 | 68 | 70 | 74 |
| | Charpy impact strength $Ip_o$ (kJ/m$^2$) | 5 | 7 | | 18 | 10 | 5 | 6 |
| | Retention of Charpy impact strength (%) | 70 | 86 | 90 | 90 | 57 | 70 | 82 |
| | Decreasing rate of MFR (%) | -20 | 20 | 9 | 8 | -22 | 10 | 15 |
| | Elastic modulus (MPa) | 2890 | 3080 | 3100 | 2850 | 2310 | 3020 | 3080 |
| | Appearance of molded article | B | A | A | A | C | C | B |

The following results were found from Table 4. The resin composition produced by the method of embodiments of the invention, especially the resin composition of the example III-3, provided the following findings: viscosity was less likely to be changed resulting from the preservation during injection molding; thermal stability, molding stability, and mechanical properties, such as Charpy impact strength and elastic modulus, were provided in a well balanced manner; and the molded article had excellent surface appearance.

The example III-4 provided finding in which the advantageous effect of embodiments of the invention could be provided even if another resin, such as polyethylene resin, was added.

In the comparison example III-1, the untreated PET was used, and the inorganic filler and thermal stabilizer were not contained. Poor results were therefore provided in each evaluation of retention of number average molecular weight, retention of Charpy impact strength, decreasing rate of MFR, and surface appearance of the molded article.

In the comparison example III-2, the untreated PET was used, the inorganic filler was contained, but the thermal stabilizer was not contained. Poor results were therefore provided in the evaluation of retention of number average molecular weight, retention of Charpy impact strength, and surface appearance of the molded article.

In the comparison example III-3, the deactivated PET was used, and the thermal stabilizer was not contained while the inorganic filler was contained. Poor results were therefore provided in the evaluation of retention of number average molecular weight.

IV. Examples and Comparison Examples of Fourth Embodiment of Invention

[Examples IV-1 to 21, Comparison Examples IV-1 to 7]

The individual components listed in Tables 5 to 8 were uniformly blended in proportions listed in Tables 5 to 8 by using a tumbling mixer, and a twin-screw extruder (commercially available from Japan Steel Works, LTD., TEX30XCT, L/D=42, and barrel numbers 12) was then used to feed the resultant products from the barrels to an extruder under conditions including a cylinder temperature of 280°C, screw-rotating speed 200 rpm, and an ejection amount 30 kg/hr. The resultant products were then fused and kneaded, thereby producing the pellets of the resin compositions.

The resultant pellets of the resin compositions were used to produce specimens through the above molding process. The produced specimens were evaluated, and the evaluation results are listed in Tables 5 to 8.

[Table 5]

| | | Examples | | | | | | |
|---|---|---|---|---|---|---|---|---|
| | | IV-1 | IV-2 | IV-3 | IV-4 | IV-5 | IV-6 | IV-7 |
| Components of resin composition (parts by weight) | Polycarbonate resin 1 | 80 | 80 | 80 | 80 | | | 70 |
| | Polycarbonate resin 2 | | | | | | | |
| | Polycarbonate resin 3 | | | | | 80 | 80 | |
| | Deactivated PET 1 | 20 | 20 | 20 | 20 | 20 | | 30 |
| | Deactivated PET 2 | | | | | | 20 | |
| | Untreated PET 1 | | | | | | | |
| | Deactivated PBT | | | | | | | |
| | Phosphorus thermal stabilizer 1 | 0.03 | 0.03 | 0.03 | 0.03 | 0.03 | 0.03 | 0.03 |
| | Hindered stabilizer | | 0.1 | 0.1 | 0.1 | 0.1 | 0.1 | 0.1 |
| | Elastomer A | 3 | 3 | | | 3 | 3 | |
| | Elastomer B | | | 3 | 3 | | | 3 |
| | Elastomer C | | | | | | | |
| | Elastomer D | | | | | | | |
| | Inorganic filler A | 5 | | 5 | | | | |
| | Inorganic filler B | | 5 | | 5 | 5 | 5 | 5 |
| | Inorganic filler C | | | | | | | |
| | Inorganic filler D | | | | | | | |
| | Inorganic filler E | | | | | | | |
| | Inorganic filler F | | | | | | | |
| | Carbon black | 0.05 | 0.05 | 0.05 | 0.05 | 0.05 | 0.05 | 0.05 |

(continued)

| | | Examples | | | | | | |
|---|---|---|---|---|---|---|---|---|
| | | IV-1 | IV-2 | IV-3 | IV-4 | IV-5 | IV-6 | IV-7 |
| Evaluation results | Retention of number average molecular weight (%) | 76 | 86 | 82 | 90 | 91 | 84 | 88 |
| | Charpy impact strength $Ip_o$ (kJ/m$^2$) | 11 | 12 | 12 | 13 | 9.1 | 8.0 | 10.9 |
| | Retention of Charpy impact strength (%) | 78 | 80 | 80 | 86 | 86 | 85 | 84 |
| | Decreasing rate of MFR (%) | 30 | 10 | 5 | -3 | 2 | -5 | -10 |
| | Elastic modulus (MPa) | 2840 | 2890 | 2860 | 2910 | 2850 | 2880 | 2920 |
| | Appearance of molded article | B | A | A | A | A | A | A |

[Table 6]

| | | Examples | | | | | | |
|---|---|---|---|---|---|---|---|---|
| | | IV-8 | IV-9 | IV-10 | IV-11 | IV-12 | IV-13 | IV-14 |
| Components of resin composition (parts by weight) | Polycarbonate resin 1 | 70 | 90 | 90 | | | | |
| | Polycarbonate resin 2 | | | | 80 | 80 | 80 | 80 |
| | Polycarbonate resin 3 | | | | | | | |
| | Deactivated PET 1 | 30 | 10 | 10 | 20 | 20 | 20 | 20 |
| | Deactivated PET 2 | | | | | | | |
| | Untreated PET 1 | | | | | | | |
| | Deactivated PBT | | | | | | | |
| | Phosphorus thermal stabilizer 1 | 0.03 | 0.03 | 0.03 | 0.03 | 0.03 | 0.03 | 0.03 |
| | Hindered phenol thermal stabilizer | 0.1 | 0.1 | 0.1 | 0.1 | 0.1 | 0.1 | 0.1 |
| | Elastomer A | | | | 3 | 3 | 3 | 3 |
| | Elastomer B | 3 | 3 | 3 | | | | |
| | Elastomer C | | | | | | | |
| | Elastomer D | | | | | | | |
| | Inorganic filler A | 5 | | 5 | 3 | | | |
| | Inorganic filler B | | 5 | | | 3 | | |
| | Inorganic filler C | | | | | | 3 | |
| | Inorganic filler D | | | | | | | 3 |
| | Inorganic filler E | | | | | | | |
| | Inorganic filler F | | | | | | | |
| | Carbon black | 0.05 | 0.05 | 0.05 | 0.05 | 0.05 | 0.05 | 0.05 |

(continued)

| | | Examples | | | | | | |
|---|---|---|---|---|---|---|---|---|
| | | IV-8 | IV-9 | IV-10 | IV-11 | IV-12 | IV-13 | IV-14 |
| Evaluation results | Retention of number average molecular weight (%) | 80 | 88 | 85 | 87 | 88 | 85 | 88 |
| | Charpy impact strength $Ip_o$ (kJ/m$^2$) | 11.7 | 11.7 | 12.0 | 9 | 10 | 10 | 10 |
| | Retention of Charpy impact strength (%) | 80 | 80 | 80 | 80 | 81 | 90 | 80 |
| | Decreasing rate of MFR (%) | 5 | -5 | 3 | 12 | 9 | -7 | 7 |
| | Elastic modulus (MPa) | 2900 | 2850 | 2820 | 2660 | 2680 | 2660 | 2690 |
| | Appearance of molded article | A | A | A | A | A | A | A |

[Table 7]

| | | Examples | | | | | | |
|---|---|---|---|---|---|---|---|---|
| | | IV-15 | IV-16 | IV-17 | IV-18 | IV-19 | IV-20 | IV-21 |
| Components of resin composition (parts by weight) | Polycarbonate resin 1 | | | | | | | |
| | Polycarbonate resin 2 | 80 | 80 | 80 | 80 | 80 | 80 | 80 |
| | Polycarbonate resin 3 | | | | | | | |
| | Deactivated PET 1 | 20 | 20 | 20 | 20 | 20 | 20 | 20 |
| | Deactivated PET 2 | | | | | | | |
| | Untreated PET 1 | | | | | | | |
| | Deactivated PBT | | | | | | | |
| | Phosphorus thermal stabilizer 1 | 0.03 | 0.03 | 0.03 | 0.03 | 0.03 | 0.03 | 0.03 |
| | Hindered phenol thermal stabilizer | 0.1 | 0.1 | 0.1 | 0.1 | 0.1 | 0.1 | 0.1 |
| | Elastomer A | 3 | 3 | | | | | 3 |
| | Elastomer B | | | 3 | | | 6 | |
| | Elastomer C | | | | 3 | | | |
| | Elastomer D | | | | | 5 | | |
| | Inorganic filler A | | | 3 | 3 | 3 | 3 | 10 |
| | Inorganic filler B | | | | | | | |
| | Inorganic filler C | | | | | | | |
| | Inorganic filler D | | | | | | | |
| | Inorganic filler E | 3 | | | | | | |
| | Inorganic filler F | | 6 | | | | | |
| | Carbon black | 0.05 | 0.05 | 0.05 | 0.05 | 0.05 | 0.05 | 0.05 |

(continued)

| | | Examples | | | | | | |
|---|---|---|---|---|---|---|---|---|
| | | IV-15 | IV-16 | IV-17 | IV-18 | IV-19 | IV-20 | IV-21 |
| Evaluation results | Retention of number average molecular weight (%) | 75 | 76 | 90 | 85 | 80 | 83 | 84 |
| | Charpy impact strengt $Ip_o$ (kJ/m$^2$) | 10 | 11 | 12 | 10 | 14 | 16 | 17 |
| | Retention of Charpy impact strength (%) | 77 | 80 | 84 | 80 | 75 | 72 | 86 |
| | Decreasing rate of MFR (%) | 14 | -20 | 9 | 15 | -30 | 0 | 20 |
| | Elastic modulus (MPa) | 2670 | 2890 | 2610 | 2630 | 2640 | 2460 | 4110 |
| | Appearance of molded article | B | B | A | A | 8 | B | A |

[Table 8]

| | | Comparative Examples | | | | | | |
|---|---|---|---|---|---|---|---|---|
| | | IV-1 | IV-2 | IV-3 | IV-4 | IV-5 | IV-6 | IV-7 |
| Components of resin composition (parts by weight) | Polycarbonate resin 1 | 80 | 80 | | | 80 | | |
| | Polycarbonate resin 2 | | | | | | 80 | 80 |
| | Polycarbonate resin 3 | | | 80 | 80 | | | |
| | Deactivated PET 1 | | 20 | 20 | | | 20 | 20 |
| | Deactivated PET 2 | | | | 20 | | | |
| | Untreated PET 1 | 20 | | | | | | |
| | Deactivated PBT | | | | | 20 | | |
| | Phosphorus thermal stabilizer 1 | 0.03 | 0. 03 | | 0.03 | 0.03 | 0.03 | 0.03 |
| | Hindered phenol thermal stabilizer | | | | | 0.1 | 0.1 | 0.1 |
| | Elastomer A | 3 | | 3 | 3 | 3 | | 3 |
| | Elastomer B | | | | | | 12 | |
| | Elastomer C | | | | | | | |
| | Elastomer D | | | | | | | |
| | Inorganic filler A | 5 | 5 | | | 5 | 3 | 30 |
| | Inorganic filler B | | | 5 | 5 | | | |
| | Inorganic filler C | | | | | | | |
| | Inorganic filler D | | | | | | | |
| | Inorganic filler E | | | | | | | |
| | Inorganic filler F | | | | | | | |
| | Carbon black | 0.05 | 0.05 | 0.05 | 0.05 | 0.05 | 0.05 | 0.05 |

(continued)

| Evaluation results | | Comparative Examples | | | | | | |
|---|---|---|---|---|---|---|---|---|
| | | IV-1 | IV-2 | IV-3 | IV-4 | IV-5 | IV-6 | IV-7 |
| Evaluation results | Retention of number average molecular weight (%) | 68 | 78 | 78 | 70 | 69 | 80 | 77 |
| | Charpy impact strength $Ip_o$ (kJ/m$^2$) | 9 | 6 | 9.2 | 7.8 | 9 | 37 | 12 |
| | Retention of Charpy impact strength (%) | 66 | 75 | 77 | 70 | 50 | 60 | 76 |
| | Decreasing rate of MFR(%) | 25 | 20 | 10 | -10 | -42 | -15 | 36 |
| | Elastic modulus (MPa) | 2830 | 2950 | 2850 | 2900 | 2990 | 1900 | 9050 |
| | Appearance of molded article | C | B | B | C | C | C | B |

The following results were found from Tables 5 to 8.

In the example IV-1, an excellent result was provided, in which the high retention of Charpy impact strength was exhibited while the small retention of the number average molecular weight was exhibited. The examples IV-1 to IV-21 of embodiments of the invention provided the following findings: viscosity was less likely to be changed resulting from the preservation during injection molding; thermal stability, molding stability, and mechanical properties, such as Charpy impact strength and elastic modulus, were provided in a well balanced manner; and the molded articles had excellent surface appearance.

The examples IV-1 to IV-5 and IV-11 to IV-17 provided the finding in which various types of polycarbonate resins could be used.

The example IV-6 provided the finding in which various types of the deactivated PETs could be used.

The examples IV-3 and IV-4 and IV-7 to IV-10 provided the finding in which the content ratio of the polycarbonate resin to the deactivated PET was effective within the scope of embodiments of the invention.

The examples IV-11 to IV-16 and IV-21 provided the finding in which various types of inorganic fillers could be used.

The results of the examples IV-11 to IV-15 provided the following findings: a surface-treated inorganic filler was preferably employed; and in such a case, a surface-treated inorganic filler having a surface containing glycidyl group was preferably employed rather than a surface-treated inorganic filler having a surface containing -COONa group.

The examples IV-17 to IV-20 provided the finding in which various types of elastomers could be used within the scope of embodiments of the invention.

In the comparison example IV-1, the untreated PET was used. Poor results were therefore provided in the evaluation of retention of number average molecular weight, retention of Charpy impact strength, and decreasing rate of MFR.

In the comparison example IV-2, the elastomer was not contained. Poor results were therefore also provided in the evaluation of retention of number average molecular weight, retention of Charpy impact strength, and decreasing rate of MFR.

In each of the comparison examples IV-3 and IV-4, the thermal stabilizer was not contained. Poor results were therefore provided in the evaluation of retention of number average molecular weight, retention of Charpy impact strength, and decreasing rate of MFR.

In the comparison example IV-5, the deactivated PBT was used in place of the deactivated PET. Poor results were therefore provided in the evaluation of retention of number average molecular weight, retention of Charpy impact strength, and decreasing rate of MFR.

In the comparison example IV-6, the elastomer was added in an excessively large amount departing from the scope of embodiments of the invention. Poor result was therefore provided in the evaluation of retention of Charpy impact strength, and significantly poor results were also provided in the evaluation of elastic modulus and appearance of the molded article.

In the comparison example IV-7, the inorganic filler was added in an excessively large amount departing from the scope of embodiments of the invention. Poor result was therefore provided in the evaluation of decreasing rate of MFR.

**Claims**

1. A method for producing a polycarbonate/polyethylene terephthalate composite resin composition comprising a step of fusing and kneading: a resin component of 100 parts by weight; and a phosphite compound or a phosphate compound employed as a phosphorus thermal stabilizer of 0.01 to 0.5 parts by weight and/or a hindered phenol thermal stabilizer of 0.01 to 1 parts by weight, the resin component containing a polycarbonate resin of 95 to 30 weight% and a polyethylene terephthalate resin of 5 to 70 weight%, wherein the polyethylene terephthalate resin contains a deactivated polycondensation catalyst; the catalyst being germanium catalyst or a titanium catalyst, wherein the polyethylene terephthalate resin containing the deactivated polycondensation catalyst has an intrinsic viscosity $[\eta]$ of 0.6 to 1.5 dl/g,

   wherein the germanium catalyst is deactivated as a result of subjecting the polyethylene terephthalate resin to hot-water vapor treatment, and

   wherein the titanium catalyst is deactivated by adding a phosphorous compound to the polyethylene terephthalate resin, the phosphorous compound being a phosphonate compound represented by the following formula (2):

   $$R^1OC(O)XP(O)(OR^2)_2...\qquad (2)$$

   wherein $R^1$ and $R^2$ are each an alkyl group having one to four carbon atoms, X represents $-CH_2-$ or $-CH(Y)-$, Y represents a phenyl group, and $R^1$ and $R^2$ may be the same or different,

   wherein the intrinsic viscosity is calculated from the relative viscosities of solutions of a frozen and crushed PET specimen in a mixture of phenol and tetrachloroethane (weight ratio 1/1) at concentrations of 1.0 g/dl, 0.5 g/dl, 0.2 g/dl and 0.1 g/dl, the relative viscosities being measured with an Ubbelohde viscosimeter at a temperature of 30°C.

2. The method for producing a polycarbonate/polyethylene terephthalate composite resin composition according to Claim 1, wherein the polyethylene terephthalate resin containing the deactivated polycondensation catalyst has a terminal carboxyl group concentration of 5 to 40 $\mu$eq/g, an intrinsic viscosity $[\eta]$ of 0.6 to 1.5 dl/g, an oxyethyleneoxyterephthaloyl unit accounting for at least 90 equivalent% of the entire repeating unit, and a solid state polymerization rate Ks of up to 0.006 (dl/g·hr), the solid state polymerization rate Ks being obtained from the formula (1)

   $$\texttt{solid state polymerization rate Ks=([\eta]s-[\eta]m)/T...(1)}$$

   wherein $[\eta]s$ represents the intrinsic viscosity (dl/g) of the polyethylene terephthalate resin which has been preserved under nitrogen flow at a temperature of 210°C for 3 hours, $[\eta]m$ represents the intrinsic viscosity (dl/g) of the polyethylene terephthalate resin which has been preserved under nitrogen flow at a temperature of 210°C for 2 hours, and T is 1 (hour),

   wherein the intrinsic viscosity is determined as defined in claim 1.

3. The method for producing a polycarbonate/polyethylene terephthalate composite resin composition according to Claim 1 or 2, wherein a phosphite compound is employed as the phosphorus thermal stabilizer.

4. The method for producing a polycarbonate/polyethylene terephthalate composite resin composition according to Claim 1 or 2, said composition further comprising an elastomer of 1 to 10 parts by weight.

5. The method for producing a polycarbonate/polyethylene terephthalate composite resin composition according to Claim 4, wherein a core/shell elastomer is employed as the elastomer.

6. The method for producing a polycarbonate/polyethylene terephthalate composite resin composition according to Claim 5, wherein any one of a polymethylmethacrylate-based polymer block and a polymethylmethacrylate-based copolymer block is employed as the shell of the core/shell elastomer.

7. The method for producing a polycarbonate/polyethylene terephthalate composite resin composition according to Claim 1 or 2, said composition further comprising an inorganic filler of 1 to 20 parts by weight.

8. The method for producing a polycarbonate/polyethylene terephthalate composite resin composition according to Claim 7, wherein a glass fiber is employed as the inorganic filler.

9. The method for producing a polycarbonate/polyethylene terephthalate composite resin composition according to Claim 8, wherein the glass fiber has a surface containing a glycidyl group.

10. The method for producing a polycarbonate/polyethylene terephthalate composite resin composition according to Claim 1 or 2, said composition further comprising an elastomer of 1 to 10 parts by weight; and an inorganic filler of 1 to 20 parts by weight.

11. The method for producing a polycarbonate/polyethylene terephthalate composite resin composition according to Claim 10, wherein a core/shell elastomer is employed as the elastomer.

12. The method for producing a polycarbonate/polyethylene terephthalate composite resin composition according to Claim 11, wherein any one of a polymethylmethacrylate-based polymer block and a polymethylmethacrylate-based copolymer block is employed as the shell of the core/shell elastomer.

13. The method for producing a polycarbonate/polyethylene terephthalate composite resin composition according to any one of Claims 10 to 12, wherein a glass fiber is employed as the inorganic filler.

14. A method for producing a molded article of polycarbonate/polyethylene terephthalate composite resin, the molded article being produced as a result of molding by using the polycarbonate/polyethylene terephthalate composite resin composition produced by the method according to any one of Claims 1 to 13.


**Patentansprüche**

1. Verfahren zur Herstellung einer Polycarbonat/Polyethylenterephthalat-Komposit-Harzzusammensetzung, umfassend einen Schritt zum Verschmelzen und Verkneten von 100 Gew.-Teilen einer Harzkomponente und 0,01 bis 0,5 Gew.-Teilen einer Phosphitverbindung oder einer Phosphatverbindung, die als Phosphor-Wärmestabilisator eingesetzt wird, und/oder 0,01 bis 1 Gew.-Teilen eines gehinderten Phenol-Wärmestabilisators, wobei die Harzkomponente 95 bis 30 Gew.-% eines Polycarbonatharzes und 5 bis 70 Gew.% eines Polyethylenterephthaltharzes enthält, wobei das Polyethylenterephthalatharz einen deaktivierten Polykondensationskatalysator enthält, wobei der Katalysator ein Germaniumkatalysator oder ein Titankatalysator ist, wobei das Polyethylenterephthalatharz, das den deaktivierten Polykondensationskatalysator enthält, eine intrinsische Viskosität [$\eta$] von 0,6 bis 1,5 dl/g aufweist, wobei der Germaniumkatalysator als Ergebnis des Unterziehens des Polyethylenterephthalatharzes einer Behandlung mit heißem Wasserdampf deaktiviert wird und wobei der Titankatalysator durch Zugabe einer Phosphorverbindung zu dem Polyethylenterephthalatharz deaktiviert wird, wobei die Phosphorverbindung eine Phosphonatverbindung ist, die durch die folgende Formel (2) dargestellt wird:

$$R^1OC(O)XP(O)(OR^2)_2 \qquad (2)$$

worin $R^1$ und $R^2$ jeweils eine Alkylgruppe mit 1 bis 4 Kohlenstoffatomen sind, X -$CH_2$- oder -CH(Y)- darstellt, Y eine Phenylgruppe darstellt und $R^1$ und $R^2$ gleich oder verschieden sein können, wobei die intrinsische Viskosität aus den relativen Viskositäten der Lösungen einer gefrorenen und zerkleinerten PET-Probe in einer Mischung aus Phenol und Tetrachlorethan (Gewichtsverhältnis 1/1) bei Konzentrationen von 1,0 g/dl, 0,5 g/dl, 0,2 g/dl und 0,1 g/dl berechnet wird, wobei die relativen Viskositäten mit einem Ubbelohde-Viskosimeter bei einer Temperatur von 30°C gemessen werden.

2. Verfahren zur Herstellung einer Polycarbonat/Polyethylenterephthalat-Komposit-Harzzusammensetzung gemäß Anspruch 1, wobei das Polyethylenterephthalatharz, das den deaktivierten Polykondensationskatalysator enthält, eine Konzentration an endständigen Carboxylgruppen von 5 bis 40 $\mu$äq/g, eine intrinsische Viskosität [$\eta$] von 0,6 bis 1,5 dl/g, eine Oxyethylenoxyterephthaloyleinheit, die mindestens 90 Äquivalent% der gesamten Wiederholungseinheit ausmacht, und eine Festphasenpolymerisationsgeschwindigkeit Ks von bis zu 0,006 (dl/g·h) aufweist, wobei die Festphasenpolymerisationsgeschwindigkeit Ks aus der Formel (1) erhalten wird

```
Festphasenpolymerisationsgeschwindigkeit
Ks = ([η]s - [η]m)/T      (1)
```

worin [η]s die intrinsische Viskosität (dl/g) des Polyethylenterephthalatharzes ist, das unter einem Stickstofffluss bei einer Temperatur von 210°C für 3 Stunden aufbewahrt wurde, [η]m die intrinsische Viskosität (dl/g) des Polyethylenterephthalatharzes ist, das unter einem Stickstofffluss bei einer Temperatur von 210°C für 2 Stunden aufbewahrt wurde, und T 1 (Stunde) ist,

wobei die intrinsische Viskosität wie in Anspruch 1 definiert bestimmt wird.

3. Verfahren zur Herstellung einer Polycarbonat/Polyethylenterephthalat-Komposit-Harzzusammensetzung gemäß Anspruch 1 oder 2, worin eine Phosphitverbindung als Phosphor-Wärmestabilisator eingesetzt wird.

4. Verfahren zur Herstellung einer Polycarbonat/Polyethylenterephthalat-Komposit-Harzzusammensetzung gemäß Anspruch 1 oder 2, wobei die Zusammensetzung ferner 1 bis 10 Gew.-Teile eines Elastomers umfasst.

5. Verfahren zur Herstellung einer Polycarbonat/Polyethylenterephthalat-Komposit-Harzzusammensetzung gemäß Anspruch 4, worin ein Kern/Schale-Elastomer als Elastomer eingesetzt wird.

6. Verfahren zur Herstellung einer Polycarbonat/Polyethylenterephthalat-Komposit-Harzzusammensetzung gemäß Anspruch 5, worin irgendeiner von einem Polymethylmethacrylat-basiertem Polymerblock und einem Polymethylmethacrylat-basiertem Copolymerblock als Schale des Kern/Schale-Elastomers eingesetzt wird.

7. Verfahren zur Herstellung einer Polycarbonat/Polyethylenterephthalat-Komposit-Harzzusammensetzung gemäß Anspruch 1 oder 2, wobei die Zusammensetzung ferner 1 bis 20 Gew.-Teile eines anorganischen Füllstoffs umfasst.

8. Verfahren zur Herstellung einer Polycarbonat/Polyethylenterephthalat-Komposit-Harzzusammensetzung gemäß Anspruch 7, worin eine Glasfaser als anorganischer Füllstoff eingesetzt wird.

9. Verfahren zur Herstellung einer Polycarbonat/Polyethylenterephthalat-Komposit-Harzzusammensetzung gemäß Anspruch 8, wobei die Glasfaser eine Oberfläche aufweist, die eine Glycidylgruppe enthält.

10. Verfahren zur Herstellung einer Polycarbonat/Polyethylenterephthalat-Komposit-Harzzusammensetzung gemäß Anspruch 1 oder 2, wobei die Zusammensetzung ferner 1 bis 10 Gew.-Teile eines Elastomers und 1 bis 20 Gew.-Teile eines anorganischen Füllstoffs umfasst.

11. Verfahren zur Herstellung einer Polycarbonat/Polyethylenterephthalat-Komposit-Harzzusammensetzung gemäß Anspruch 10, wobei ein Kern/Schale-Elastomer als Elastomer eingesetzt wird.

12. Verfahren zur Herstellung einer Polycarbonat/Polyethylenterephthalat-Komposit-Harzzusammensetzung gemäß Anspruch 11, worin irgendeiner von einem Polymethylmethacrylat-basiertem Polymerblock und einem Polymethylmethacrylat-basiertem Copolymerblock als Schale des Kern/Schale-Elastomers eingesetzt wird.

13. Verfahren zur Herstellung einer Polycarbonat/Polyethylenterephthalat-Komposit-Harzzusammensetzung gemäß irgendeinem der Ansprüche 10 bis 12, wobei eine Glasfaser als anorganischer Füllstoff eingesetzt wird.

14. Verfahren zur Herstellung eine Formartikels eines Polycarbonat/Polyethylenterephthalat-Kompositharzes, wobei der Formartikel als Ergebnis eines Formens unter Verwendung der durch das Verfahren gemäß irgendeinem der Ansprüche 1 bis 13 hergestellten Polycarbonat/Polyethylenterephthalat-Komposit-Harzzusammensetzung hergestellt wird.

**Revendications**

1. Procédé de production d'une composition de résine composite polycarbonate/poly(téréphtalate d'éthylène) comprenant une étape de fusion et de malaxage de : un composant résine de 100 parties en poids ; et un composé phosphite ou un composé phosphate employé en tant que stabilisant thermique à base de phosphore de 0,01 à 0,5 partie en poids et/ou un stabilisant thermique à base de phénol encombré de 0,01 à 1 partie en poids, le composant résine contenant une résine de polycarbonate de 95 à 30 % en poids et une résine de poly(téréphtalate d'éthylène) de 5 à 70 % en poids, dans lequel la résine de poly(téréphtalate d'éthylène) contient un catalyseur de polycondensation désactivé ; le catalyseur étant un catalyseur de germanium ou un catalyseur de titane, dans lequel la résine de poly(téréphtalate d'éthylène) contenant le catalyseur de polycondensation désactivé a une viscosité intrinsèque [η] de 0,6 à 1,5 dl/g,

dans lequel le catalyseur de germanium est désactivé en résultat de la soumission de la résine de poly(téréphtalate d'éthylène) à un traitement à la vapeur d'eau chaude, et

dans lequel le catalyseur de titane est désactivé par ajout d'un composé de phosphore à la résine de poly(téréphtalate d'éthylène), le composé de phosphore étant un composé phosphonate représenté par la formule (2) suivante :

$$R^1OC(O)XP(O)(OR^2)_2... \quad (2)$$

dans lequel $R^1$ et $R^2$ représentent chacun un groupe alkyle comportant de un à quatre atomes de carbone, X représente $-CH_2-$ ou $-CH(Y)-$, Y représente un groupe phényle, et $R^1$ et $R^2$ peuvent être identiques ou différents, dans lequel la viscosité intrinsèque est calculée d'après les viscosités relatives des solutions d'un spécimen de PET congelé et broyé dans un mélange de phénol et de tétrachloroéthane (rapport pondéral 1/1) à des concentrations de 1,0 g/dl, 0,5 g/dl, 0,2 g/dl et 0,1 g/dl, les viscosités relatives étant mesurées à l'aide d'un viscosimètre Ubbelohde à une température de 30 °C.

2. Procédé de production d'une composition de résine composite polycarbonate/poly(téréphtalate d'éthylène) selon la revendication 1, dans lequel la résine de poly(téréphtalate d'éthylène) contenant le catalyseur de polycondensation désactivé a une concentration de groupes carboxyles terminaux de 5 à 40 μéq/g, une viscosité intrinsèque [η] de 0,6 à 1,5 dl/g, un motif oxyéthylèneoxytéréphtaloyle représentant au moins 90 % équivalent du motif répétitif total, et un taux de polymérisation à l'état solide Ks allant jusqu'à 0,006 (dl/g·h), le taux de polymérisation à l'état solide Ks étant obtenu d'après la formule (1)

$$\text{taux de polymérisation à l'état solide } K_s = ([η]s-[η]m)/T...(1)$$

dans lequel [η]s représente la viscosité intrinsèque (dl/g) de la résine de poly(téréphtalate d'éthylène) qui a été préservée sous un flux d'azote à une température de 210 °C pendant 3 heures, [η]m représente la viscosité intrinsèque (dl/g) de la résine de poly(téréphtalate d'éthylène) qui a été préservée sous un flux d'azote à une température de 210 °C pendant 2 heures, et T vaut 1 (heure), dans lequel la viscosité intrinsèque est déterminée selon la revendication 1.

3. Procédé de production d'une composition de résine composite polycarbonate/poly(téréphtalate d'éthylène) selon la revendication 1 ou 2, dans lequel un composé phosphite est employé en tant que stabilisant thermique à base de phosphore.

4. Procédé de production d'une composition de résine composite polycarbonate/poly(téréphtalate d'éthylène) selon la revendication 1 ou 2, ladite composition comprenant en outre un élastomère de 1 à 10 parties en poids.

5. Procédé de production d'une composition de résine composite polycarbonate/poly(téréphtalate d'éthylène) selon la revendication 4, dans lequel un élastomère de type âme/enveloppe est employé en tant qu'élastomère.

6. Procédé de production d'une composition de résine composite polycarbonate/poly(téréphtalate d'éthylène) selon la revendication 5, dans lequel l'un quelconque d'un bloc de polymère à base de polyméthylméthacrylate et d'un bloc de copolymère à base de polyméthylméthacrylate est employé en tant qu'enveloppe de l'élastomère de type âme/enveloppe.

7. Procédé de production d'une composition de résine composite polycarbonate/poly(téréphtalate d'éthylène) selon la revendication 1 ou 2, ladite composition comprenant en outre une charge inorganique de 1 à 20 parties en poids.

8. Procédé de production d'une composition de résine composite polycarbonate/poly(téréphtalate d'éthylène) selon la revendication 7, dans lequel une fibre de verre est employée en tant que charge inorganique.

9. Procédé de production d'une composition de résine composite polycarbonate/poly(téréphtalate d'éthylène) selon la revendication 8, dans lequel la fibre de verre a une surface contenant un groupe glycidyle.

10. Procédé de production d'une composition de résine composite polycarbonate/poly(téréphtalate d'éthylène) selon la revendication 1 ou 2, ladite composition comprenant en outre un élastomère de 1 à 10 parties en poids; et une charge inorganique de 1 à 20 parties en poids.

11. Procédé de production d'une composition de résine composite polycarbonate/poly(téréphtalate d'éthylène) selon la revendication 10, dans lequel un élastomère de type âme/enveloppe est employé en tant qu'élastomère.

12. Procédé de production d'une composition de résine composite polycarbonate/poly(téréphtalate d'éthylène) selon la revendication 11, dans lequel l'un quelconque d'un bloc de polymère à base de polyméthylméthacrylate et d'un bloc de copolymère à base de polyméthylméthacrylate est employé en tant qu'enveloppe de l'élastomère de type âme/enveloppe.

13. Procédé de production d'une composition de résine composite polycarbonate/poly(téréphtalate d'éthylène) selon l'une quelconque des revendications 10 à 12, dans lequel une fibre de verre est employée en tant que charge inorganique.

14. Procédé de production d'un article moulé de résine composite polycarbonate/poly(téréphtalate d'éthylène), l'article moulé étant produit en résultat du moulage à l'aide de la composition de résine composite polycarbonate/poly(téréphtalate d'éthylène) produite par le procédé selon l'une quelconque des revendications 1 à 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007023118 A

- JP 2009001620 A